(19) Europäisches Patentamt / European Patent Office / Office européen des brevets

(11) **EP 2 876 144 B1**

(12) **EUROPEAN PATENT SPECIFICATION**

(45) Date of publication and mention
of the grant of the patent:
**30.08.2017 Bulletin 2017/35**

(21) Application number: **13819793.4**

(22) Date of filing: **18.07.2013**

(51) Int Cl.:
*C09D 183/04* (2006.01)     *B05D 7/24* (2006.01)
*B32B 27/18* (2006.01)     *C09D 5/10* (2006.01)
*C09D 7/12* (2006.01)     *C09D 183/02* (2006.01)

(86) International application number:
**PCT/JP2013/069538**

(87) International publication number:
**WO 2014/014063 (23.01.2014 Gazette 2014/04)**

(54) **PRIMARY RUST PREVENTIVE COATING COMPOSITION AND USE THEREOF**

ROSTVERHINDERNDE PRIMÄRBESCHICHTUNGSZUSAMMENSETZUNG UND VERWENDUNG DAVON

COMPOSITION DE REVÊTEMENT PRIMAIRE ANTIROUILLE ET SON UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.07.2012 JP 2012161685**

(43) Date of publication of application:
**27.05.2015 Bulletin 2015/22**

(73) Proprietor: **Chugoku Marine Paints, Ltd.
Hiroshima 739-0652 (JP)**

(72) Inventor: **OKADA, Masamitsu
Otake-shi
Hiroshima 739-0652 (JP)**

(74) Representative: **Hoffmann Eitle
Patent- und Rechtsanwälte PartmbB
Arabellastraße 30
81925 München (DE)**

(56) References cited:
**EP-A2- 0 246 566     JP-A- 2006 291 149
JP-A- 2007 507 331     JP-A- 2008 081 667**

• **DATABASE WPI Week 200946 Thomson
Scientific, London, GB; AN 2009-L04664
XP002753179, -& WO 2009/081452 A1
(RESTORATION ENVIRONMENT REBIRTH CO
LTD) 2 July 2009 (2009-07-02)**
• **DATABASE WPI Week 200564 Thomson
Scientific, London, GB; AN 2005-622887
XP002753180, -& JP 2005 232537 A (SHINETSU
CHEM IND CO LTD) 2 September 2005
(2005-09-02)**
• **DATABASE WPI Week 200655 Thomson
Scientific, London, GB; AN 2006-538722
XP002753181, -& JP 2006 213909 A
(SHIELDTECHS INC) 17 August 2006 (2006-08-17)**
• **DATABASE WPI Week 201135 Thomson
Scientific, London, GB; AN 2011-F26288
XP002753158, -& CN 102 002 318 A (HUBEI
ZHONGKE BOCE NEW MATERIAL RES INST) 6
April 2011 (2011-04-06)**
• **DATABASE WPI Week 201101 Thomson
Scientific, London, GB; AN 2010-P80997
XP002753186, -& JP 2010 269497 A (NIPPON
STEEL CORP) 2 December 2010 (2010-12-02)**
• **DATABASE WPI Week 198535 Thomson
Scientific, London, GB; AN 1985-214384
XP002753159, -& JP S60 137973 A (MITSUI ENG
& SHIPBUILDING CO) 22 July 1985 (1985-07-22)**

Remarks:
The file contains technical information submitted after the application was filed and not included in this specification

**Description**

Technical Field

The present invention relates to a primary rust-preventive coating composition (shop primer) suitable for use in steel-plate pretreatment conducted in processing steel plates of ships, marine structures, plants, bridges, overland tanks and the like; and uses thereof. In more detail, the present invention relates to a primary rust-preventive coating composition including a siloxane-based binder and a flaky zinc-based powder and being capable of forming a rust-preventive coating film having an average dry film thickness of not more than 10 $\mu$m; and uses thereof.

Background Art

Conventionally, large steel structures such as ships, marine structures, plants, bridges and overland tanks while being built, in order to be prevented from rusting, have their steel plate surfaces coated with primary rust-preventive coating materials. Known primary rust-preventive coating materials include organic primary rust-preventive coating materials such as wash primers, non-zinc epoxy primers and epoxy zinc-rich primers as well as inorganic zinc primary rust-preventive coating materials including siloxane-based binders and zinc powders. Of these primary rust-preventive coating materials, most widely used are inorganic zinc primary rust-preventive coating materials, which are excellent in weldability.

Primary rust-preventive coating films formed from conventional inorganic zinc primary rust-preventive coating materials have an average dry film thickness of about 15 $\mu$m. The formation of a coating film with its thickness smaller than the above could increase the speed of process-treatment in welding and cutting step subsequent to coating step, which is advantageous in terms of productivity.

There are three methods for applying conventional primary rust-preventive coating materials so as to provide thin films (e.g., a thickness of not more than 10 $\mu$m).

A first method is to reduce the discharge flow amount of a primary rust-preventive coating material at the time of its application. However, this method requires the discharge flow rate of a currently-available coating machine to be below the discharge flow rate limit allowing for stable coating procedure, resulting in the failure of uniform coating.

A second method is the development of a coating machine itself. Yet, relying on a conventional primary rust-preventive coating material and a conventional apparatus that are currently available in order to provide thin films is difficult. Even if such a machine is developed, the need to replace a conventional apparatus with a new one would require huge expense.

A third method is to dilute a primary rust-preventive coating material with a considerable amount of an organic solvent to reduce the solid content concentration of the coating material. This method is a practical one that achieves the formation of a thin film under current circumstances; however, this method will consequently increase the volatile organic compounds (VOC) emission amount per coated area, adversely affecting environment. Even if a thin film is obtained, the film has reduced amount of binder amount per unit area of a steel plate surface to be coated, so that coating effect is lost and the performance of the rust prevention of steel plates is lowered.

Thus, the application of conventional primary rust-preventive coating materials so as to form thin films was substantially impossible.

On the other hand, Patent Literature 1, for the purpose of providing a primary rust-preventive coating composition giving superior weldability at the time of gas sealed welding, studies reducing the amount of zinc powder to be used, and further describes that for the reduction of the amount of the zinc powder, using zinc flake is effective. However, Patent Literature 1 is entirely silent on reducing the thickness of coating films formed from said composition, said coating films having an average dry film thickness of 15 to 25 $\mu$m. Thus, the use amount per coated area of the coating material cannot be reduced, so that VOC emission amount cannot be reduced. There is obviously no mention provided therein about long-term rust prevention properties of coating films with reduced thickness.

Patent Literature 2 discloses a rust-preventive coating composition containing an organic silicon compound, an organic titanate compound, a metal powder, e.g., a flaky zinc powder, and an organic solvent, the composition being capable of forming a coating film that has an average dry film thickness of about 10 $\mu$m and exhibits high anticorrosiveness. However, in order to obtain such a coating film, a step is required to heat, at 200 to 400°C, the rust-preventive coating composition applied on a metal surface. For this reason, said composition is not suited in steel-plate pretreatment carried out in processing steel plates of ships, marine structures, plants, bridges, overland tanks and the like.

Patent Literature 3 discloses a rust-preventive coating material containing a spherical zinc powder, a flaky zinc powder, a spherical or flaky aluminum powder and a curable silicone compound. However, if this coating material is used to give a film with an average dry film thickness of approximately 15 $\mu$m and the application of said coating material is followed by treatments such as welding treatment, problems in terms of insufficient anticorrosiveness and welding defect occur. Thus, this coating material is not suited for use in steel-plate pretreatment carried out in processing steel plates of ships, marine structures, plants, bridges, overland tanks and the like.

Patent Literature 4 relates to a corrosion inhibitor including a binder component and an electroconductive material powder. The binder component comprises a silane compound or a partial hydrolysis and condensation product thereof and a metal alkoxides.

Patent Literature 5 relates to an anticorrosive agent containing scaly zinc powder, scaly aluminum powder, a curable silicone compound containing an organosiloxy group and a non-silicon metal alkoxides.

Patent Literature 6 relates to a resin composition containing scaly zinc, aluminum, copper or nickel powder and a silicone resin containing a silane compound or its partial hydrolysis condensate.

Patent Literature 7 relates to a 2-component corrosion protection paint. The first component comprises solvent, anti-settling agent, epoxide resin E44 or polyvinyl butyral, and scaly zinc powder. The second component comprises solvent, resin and catalyst.

Patent Literature 8 relates to an anti-corrosive paint composition containing a hydrolyzed condensate of tetraalkoxy silicate as a vehicle, zinc dust and titanium oxide.

Patent Literature 9 relates to a steel material having at least one primer layer. The primer layer comprises condensed material of tetraalkylsilicate, aluminum powder, zinc powder, conductive pigment and extender pigment.

Citation List

Patent Literature

[Patent Literature 1] JP-A-1985-133072

[Patent Literature 2] WO-A-2009/093319

[Patent Literature 3] JP-A-2012-036279

[Patent Literature 4] WO 2009/081452 A1

[Patent Literature 5] JP 2005 232537 A

[Patent Literature 6] JP 2006 213909 A1

[Patent Literature 7] CN 102 002 318 A

[Patent Literature 8] EP 0 246 566 A2

[Patent Literature 9] JP 2010 269497 A

Summary of the Invention

Technical Problem

It is an object of the present invention to solve the problems associated with the above conventional techniques and to provide a primary rust-preventive coating composition which by being dried and cured at room temperature is capable of forming a coating film having an average dry film thickness of not more than 10 $\mu$m even with the use of conventional coating machines, and having excellent rust prevention properties and overcoatability as well as excellent weldability/cut-ability at the time of welding and cutting steel plates, and uses thereof.

Technical Solution

The present inventors, seeking the solution to the above problems, studied a coating composition containing a siloxane-based binder and a zinc dust including a flaky zinc-based powder, and focused on how the formation of a coating film having an average dry film thickness not more than 10 $\mu$m is affected by a pigment volume concentration (PVC) and a weight average molecular weight (Mw) of the siloxane-based binder, as well as a mass ratio of zinc dust to siloxane-based binder ($Zn/SiO_2$), which are described later.

As a result of the study, it has been found that in Patent Literature 1, PVC of a coating composition exceeds 60%, and this makes it difficult to form a coating film that has an average dry film thickness of not more than 10 $\mu$m and exhibits superior properties. It has also been found that in Patent Literature 2, the use of a low-molecular-weight substance as an organosilicon compound makes it difficult for curing to be conducted at room temperature.

In Patent Literature 3, a coating composition has PVC lower than 35% or has a significantly high mass ratio of zinc dust to siloxane-based binder ($Zn/SiO_2$). Thus, it has been found that applying the composition having PVC in an amount lower than 35% so as to give a film with an average dry film thickness of approximately 15 $\mu$m is expected to cause the film to have insufficient anticorrosiveness, and that applying the composition having a significantly high mass ratio of zinc dust to siloxane-based binder ($Zn/SiO_2$) leads to defective weldability and the use of such a composition as a primary rust-preventive coating material is difficult.

Based on the above findings, the present inventors conducted further extensive studies regarding PVC and Mw of the siloxane-based binder as well as the mass ratio of zinc dust to siloxane-based binder. Then, it has been found that when these are within specific ranges, the problems can be solved. The present invention has been completed based on these findings.

That is, a primary rust-preventive coating composition according to an embodiment of the present invention is provided which includes a siloxane-based binder (A) having a weight average molecular weight (Mw) as measured by gel permeation chromatography (GPC) in terms of standard polystyrene of 1000 to 6000, wherein the siloxane-based binder (A) is a condensate of an alkylsilicate, a zinc dust (B) including a flaky zinc-based powder (b-1), and a conductive pigment (C), the primary rust-preventive coating composition having a pigment volume concentration (PVC) of 35 to 60%, and having a mass ratio ((B)/(A)) of the zinc dust (B) to the siloxane-based binder (A) in terms of $SiO_2$ of 1.0 to 5.0.

It is preferable that based on 100% by mass of the total content of the zinc dust (B), the content of the flaky zinc-based powder (b-1) is not less than 15% by mass. It is preferable that the mass ratio ((b-1)/(A)) of the flaky zinc-based powder (b-1) to the siloxane-based binder (A) in terms of $SiO_2$ is 1.0 to 5.0.

As the zinc dust (B), it is also preferable that a spherical zinc-based powder (b-2) is further contained together with the flaky zinc-based powder (b-1) . Based on 100% by mass of the total content of the zinc dust (B), it is also preferable that the content of the flaky zinc-based powder (b-1) is 15 to 90% by mass and the content of the spherical zinc-based powder (b-2) is 10 to 85% by mass.

The conductive pigment (C) may be zinc oxide.

It is preferable that the flaky zinc-based powder (b-1) contains at least one selected from a flaky zinc powder and a flaky zinc alloy powder. It is preferable that the flaky zinc-based powder (b-1) has a median diameter (D50) of not more than 30 $\mu$m and an average thickness of not more than 1 $\mu$m.

An embodiment of the present invention is a primary rust-preventive coating film which is formed from the primary rust-preventive coating composition and has an average dry film thickness of not more than 10 $\mu$m.

An embodiment of the present invention is a substrate with a primary rust-preventive coating film which includes a substrate and a coating film, the coating film being provided on a surface of the substrate and formed from the primary rust-preventive coating composition.

An embodiment of the present invention is a substrate rust prevention method or a process for producing a substrate with a primary rust-preventive coating film, which includes a step of applying the primary rust-preventive coating composition on a substrate surface and a step of curing the coating composition applied to form a primary rust-preventive coating film.

Advantageous Effects of the Invention

The present invention can provide a primary rust-preventive coating composition which by being dried and cured at room temperature is capable of forming a coating film having an average dry film thickness of not more than 10 $\mu$m even with the use of conventional coating machines, and having excellent rust prevention properties and overcoatability as well as excellent weldability/cut-ability at the time of welding and cutting steel plates; and can provide uses thereof.

Brief Description of Drawings

[Fig. 1] Fig. 1 shows a sandblasted plate used in evaluations in Examples.
[Fig. 2] Fig. 2 shows conditions of welding of the sandblasted plate.

Embodiments of the Invention

Hereinafter, a primary rust-preventive coating composition of the present invention (hereinafter, also referred to as the "coating composition"), a primary rust-preventive coating film, a substrate with the primary rust-preventive coating film and its production process, and a substrate rust prevention method, including preferred embodiments thereof, are described in greater detail.

[Primary rust-preventive coating composition]

The primary rust-preventive coating composition of the present invention contains a siloxane-based binder (A) and a zinc dust (B) including a flaky zinc-based powder (b-1). The composition may further contain one type or two or more types selected from other coating film-forming main elements such as binders excluding the binder (A), other pigment components excluding the zinc dust (B), additives, organic solvents and the like.

<<1. Coating Film-Forming Main Element>>

A coating film-forming main element is a main element necessary to form a coating film. For example, high-molecular substances such as polymerized oil, natural resins, synthetic resins, cellulose derivatives and the like fall within the coating film-forming main element. The siloxane-based binder (A) and other binders, described below, fall within the coating film-forming main element.

<Siloxane-based Binder (A)>

The coating composition of the present invention contains the siloxane-based binder (A) as an essential component.
The siloxane-based binder (A) has a weight average molecular weight (Mw) of 1000 to 6000, preferably 1200 to 5000, more preferably 1300 to 4000. The Mw is a value in terms of standard polystyrene that is measured by gel permeation chromatography (GPC), and its detail is as described in Examples.
When Mw is in the above range, at the time of drying, the coating material can be cured at room temperature (e. g. , 5 to 40 °C) in a short period of time, and the coating film has improved rust prevention properties and adhesion strength and is prevented from causing blowhole (internal bubble) at the time of weld-treatment. On the other hand, if Mw is below the lower limit described above, the curing reaction of the siloxane-based binder (A) is so slow that a coating film in its drying needs to be cured by heating at high temperature (e.g., 200 to 400° C) when needing to be cured in a short period of time. If Mw exceeds the upper limit, in which case the siloxane-based binder (A) coats the surface of the zinc dust (B), the coating film has inferior rust prevention properties.
The siloxane-based binder (A) is a condensate of an alkylsilicate; specifically, a partial hydrolyzate condensate of the alkylsilicate.
Examples of the alkylsilicates include compounds such as tetramethylorthosilicate, tetraethylorthosilicate, tetra-n-propylorthosilicate, tetra-i-propylorthosilicate, tetra-n-butylorthosilicate, tetra-sec-butylorthosilicate; and compounds such as methylpolysilicate and ethylpolysilicate.
Of these, condensates of tetraethylorthosilicate are preferable; and particularly preferable is a partial hydrolyzate condensate of Ethyl Silicate 40 (product name; COLCOAT CO., LTD.), which is an initial condensate of tetraethylorthosilicate.
The siloxane-based binder (A) can be produced by a hitherto known method. For example, e.g., hydrochloric acid is added to a mixture solution of an organic solvent and an alkylsilicate, followed by stirring, to prepare a partial hydrolyzate condensate. Thereby, the siloxane-based binder (A) can be prepared.
The siloxane-based binders (A) may be used singly, or two or more kinds thereof may be used in combination.
In the coating composition of the present invention, the content of the siloxane-based binder (A) is usually 8 to 40% by mass, preferably 12 to 35% by mass, more preferably 15 to 25% by mass of the amount of the whole composition. When the content is in the above range, a coating film even when having an average dry film thickness of not more than 10 $\mu$m allows a steel plate surface to have an increased amount of binder per its unit area, and the flaky zinc-based powder (b-1) has its planar surface oriented substantially in parallel to the surface of the coating film. For this reason, continuousness of the coating film is maintained, so that the bare surface of a steel plate is not exposed. In this way, it is possible to prevent steel plates from rusting.
When the coating composition of the present invention is a two component-type composition described later, it is preferable that the content of the siloxane-based binder (A) in a coating material obtained by mixing a main agent component with a pigment paste component is controlled to be in the above range.

<Other Binder>

The coating composition of the present invention may contain other binders in addition to the siloxane-based binder (A) in a range that is not detrimental to the objects and effects of the present invention. Examples of the other binders include polyvinylbutyral resin. Examples of commercially-available products of the polyvinylbutyral resin include S-LEC B BM-2 (product name; Sekisui Chemical Co., Ltd.).

## <<2. Pigment Component>>

The pigment component is, for example, the zinc dust (B) such as the flaky zinc-based powder (b-1) and the spherical zinc-based powder (b-2), the conductive pigment (C) excluding (B) described above, rust-preventive pigments excluding (B) and (C) described above, inorganic powders excluding (B) and (C) described above, molybdenum and molybdenum compounds. The coating composition of the present invention contains the flaky zinc-based powder (b-1) as an essential component, and may further contain such other pigment components as described above.

### <Zinc Dust (B)>

The coating composition of the present invention contains the zinc dust (B).

In the present invention, "zinc dust" refers to a powder of a metal zinc or a powder of an alloy mainly composed of zinc (e.g., an alloy formed by zinc and at least one selected from aluminum, magnesium and tin).

In the coating composition of the present invention, it is preferable that the mass ratio ((B)/(A)) of the zinc dust (B) to the siloxane-based binder (A) in terms of $SiO_2$ is controlled to be 1.0 to 5.0, more preferably 1.2 to 4.5, still more preferably 1.5 to 3.5. The mass ratio ((B)/(A)) being in the above range is preferable in terms of anticorrosiveness and weldability. If the mass ratio ((B)/(A)) exceeds the above range, the occurrence of welding defects tends to be more frequent. If the mass ratio ((B)/(A)) is below the above range, the anticorrosiveness tends to be insufficient.

When the coating composition of the present invention is a two component-type composition described later, it is preferable that the mass ratio ((B)/(A)) in a coating material obtained by mixing a main agent component with a pigment paste component is controlled to be in the above range.

The coating composition of the present invention contains, as the zinc dust (B), the flaky zinc-based powder (b-1). Based on 100% by mass of the total content of zinc dust (B), the content of the flaky zinc-based powder (b-1) is preferably not less than 15% by mass.

In a preferred embodiment of the coating composition of the present invention, based on 100% by mass of the total content of the zinc dust (B), it is preferable that the content of the flaky zinc-based powder (b-1) exceeds 85% by mass, more preferably the content exceeds 90% by mass, still more preferably the content exceeds 95% by mass. Using the (b-1) in the above range is preferable in terms of being able to form a coating film superior in rust prevention properties, overcoatability and weldability/cut-ability.

A preferred embodiment of the coating composition of the present invention contains, together with the flaky zinc-based powder (b-1), the spherical zinc-based powder (b-2). For example, based on 100% by mass of the total content of the zinc dust (B), it is preferable that the content of the flaky zinc-based powder (b-1) is 15 to 90% by mass and the content of the spherical zinc-based powder (b-2) is 10 to 85% by mass; and it is more preferable that the content of the flaky zinc-based powder (b-1) is 15 to 70% by mass and the content of the spherical zinc-based powder (b-2) is 30 to 85% by mass. Using (b-1) and (b-2) described above in the above range is preferable in terms of reducing the use amount of expensive flaky zinc-based powder, and as described later, being able to form a coating film superior in rust prevention properties, overcoatability and weldability/cut-ability without impairing the action of the flaky zinc-based powder.

In the latter preferred embodiment, it is preferable that the coating composition of the present invention further contains the conductive pigment (C). Using (C) described above together with (b-1) and (b-2) described above can lead to the formation of a coating film superior particularly in rust prevention properties, overcoatability and weldability/cut-ability.

If a coating film is heated at a high temperature exceeding 800°C at the time of e.g., welding and cutting, since the flaky zinc-based powder has a large specific surface area, metal zinc can be oxidized and anticorrosiveness after heating can be reduced. On the other hand, when the spherical zinc-based powder is used together with the flaky zinc-based powder, even if the coating film is heated at such a high temperature as described above, by metal zinc remaining within the spherical zinc-based powder, anticorrosiveness after heating can be ensured.

The flaky zinc-based powder, which has a metal glossy color, has its planar surface oriented toward a coating film surface at the time of forming a coating film. Thus, even if the coating composition contains another coloring pigment, its coating film surface tends to have a hue of metal glossy color. Thus, using the flaky zinc-based powder can restrict hue designing. The above tendency is alleviated and free hue designing can be attained by using the spherical zinc-based powder together with the flaky zinc-based powder in combination, since doing so relatively reduces the content of the flaky zinc-based powder.

Flaky Zinc-based Powder (b-1)

The coating composition of the present invention contains the flaky zinc-based powder (b-1) as an essential component.

The flaky zinc-based powder (b-1) functions as a rust-preventive pigment that prevents a steel plate from rusting. Examples of the flaky zinc-based powder (b-1) include at least one selected from a flaky zinc powder and a flaky zinc alloy powder. Examples of the zinc alloy include an alloy formed by zinc and at least one selected from aluminum, magnesium and tin, preferably zinc-aluminum alloy and zinc-tin alloy.

It is preferable that the flaky zinc-based powder (b-1) has a median diameter (D50) of not more than 30 $\mu$m and an average thickness of not more than 1 $\mu$m; and it is more preferable that the flaky zinc-based powder (b-1) has a median diameter (D50) of 5 to 20 $\mu$m and an average thickness of 0.2 to 0.9 $\mu$m. The aspect ratio, represented by the ratio of a median diameter (D50) to an average thickness, (median diameter/average thickness), is preferably 10 to 150, more preferably 20 to 100.

The median diameter can be measured by using a laser scattering diffraction-type particle size distribution measurement apparatus, for example "SALD 2200" (product name; manufactured by Shimadzu Corporation). The average thickness can be determined as follows: by using a scanning electronic microscope (SEM), for example, "XL-30" (product name; manufactured by Phillips) to observe the flaky zinc-based powder (b-1), the thicknesses of several tens to several hundreds of the powder particles are measured and an average value thereof is determined.

The flaky zinc-based powder (b-1) with such a shape has a larger specific surface area as compared with the spherical zinc-based powder (b-2), enabling close contact among particles in the coating film, so that a coating film even if having a small amount of the zinc dust (B) (e.g., not more than 36 g/m$^2$) can be formed which is excellent in rust prevention properties after long-term exposure. The median diameter (D50) that is not more than the above-mentioned upper limit can lead to the prevention of the clogging of the coating material in a coating machine. The specific surface area can be measured by using a flowing-type specific surface area automatic measuring instrument, for example "FlowSorbII 2300" (product name; manufactured by Shimadzu Corporation).

Examples of commercially-available products of the flaky zinc powder include STANDART Zinc flake GTT, STANDART Zinc flake G and STANDART Zinc flake AT (product names; manufactured by ECKART GmbH). Examples of commercially-available products of the flaky zinc alloy powder include STAPA 4 ZNAL7 (alloy of zinc and aluminum; product name; manufactured by ECKART GmbH) and STAPA 4 ZNSN30 (alloy of zinc and tin; product name; manufactured by ECKART GmbH).

The flaky zinc-based powders (b-1) may be used singly, or two or more kinds thereof may be used in combination.

In a preferred embodiment, it is preferable that in the coating composition of the present invention, the mass ratio ((b-1)/(A)) of the flaky zinc-based powder (b-1) to the siloxane-based binder (A) in terms of SiO$_2$ is controlled to be 1.0 to 5.0, more preferably 1.2 to 4.5, still more preferably 1.5 to 3.5. The mass ratio ((b-1)/(A)) in the above range is preferable in terms of allowing the distance among particles in a coating film obtained by drying and curing to be close.

When the coating composition of the present invention is a two component-type composition described later, in a preferred embodiment, it is preferable that the mass ratio ((b-1)/(A)) in a coating material obtained by mixing a main agent component with a pigment paste component is controlled to be in the above range.

Spherical Zinc-based Powder (b-2)

A preferred embodiment of the coating composition of the present invention contains a spherical zinc-based powder (b-2).

The spherical zinc-based powder (b-2) functions as a rust-preventive pigment that prevents a steel plate from rusting. Examples of the spherical zinc-based powder (b-2) include at least one selected from a spherical zinc powder and a spherical zinc alloy powder. Examples of the zinc alloy include an alloy formed by zinc and at least one selected from aluminum, magnesium and tin, preferably zinc-aluminum alloy and zinc-tin alloy.

The term "spherical" used in the spherical zinc-based powder (b-2) refers to the spherical shape of the powder, with no particular range defined. However, usually, the aspect ratio is preferably 1 to 3. The spherical zinc-based powder (b-2) is inexpensive compared with the flaky zinc-based powder (b-1), and using the spherical zinc-based powder (b-2) can lead to the reduction of cost for the coating composition. The aspect ratio can be measured by the same method as in the flaky zinc-based powder (b-1).

It is preferable that the spherical zinc-based powder (b-2) has a median diameter (D50) of 2 to 15 $\mu$m; and it is more preferable that the median diameter (D50) is 2 to 7 $\mu$m. The median diameter can be measured by using a laser scattering diffraction-type particle size distribution measuring instrument, for example "SALD 2200" (product name; manufactured by Shimadzu Corporation) .

Examples of commercially-available products of the spherical zinc powder include F-2000 (product name; manufactured by The Honjo Chemical Corporation).

The spherical zinc-based powders (b-2) may be used singly, or two or more kinds thereof may be used in combination.

<Conductive Pigment (C)>

The coating composition of the present invention contains a conductive pigment (C). Using (C) described above in combination is preferable in terms of achieving effective electric anticorrosive effect of zinc and improving rust prevention properties. Where the flaky zinc-based powder (b-1) is used together with the spherical zinc-based powder (b-2), in particular when the content of the flaky zinc-based powder (b-1) is 15 to 70% by mass and the content of the spherical zinc-based powder (b-2) is 30 to 85% by mass based on 100% by mass of the zinc dust (B), using (C) described above in combination is preferable in particular in terms of enhancing the electric anticorrosive effect of the spherical zinc-based powder.

The above is further described in detail as follows. In order to ensure rust prevention properties of primary rust-preventive coating materials, efficiently supplying electrons generated when zinc particles are ionized to a substrate such as a steel plate is important in terms of accomplishing sacrificial anticorrosive effect. In general, by allowing zinc particles in a dry coating film to contact with one another, their electroconductive effect can be attained. When the particles contact with one another, the shape of the flaky zinc-based powder is particularly suitable. However, it can happen that contacting of particles with one another is lost and their effect is not easily exhibited when the proportion of the flaky zinc-based powder is reduced and the proportion of the spherical zinc-based powder is increased. At this time, by allowing a conductive pigment to be contained in the coating film in order for the conducting pigment to serve as a connection among zinc particles, their electroconductive effect can be supplemented. By doing so, effective sacrificial anticorrosive effect can be obtained, and superior rust prevention properties can be exhibited.

Examples of the conductive pigment (C) include zinc oxide, metal powders other than zinc dust and carbon powders. Of these, preferred is zinc oxide, which is inexpensive and has high conductivity.

Examples of commercially-available products of zinc oxide include zinc oxide of JIS 1 grade (manufactured by Sakai Chemical Industry Co., Ltd.) and zinc oxide of JIS 3 grade (manufactured by Hakusui Tech Co., Ltd. , manufactured by Sakai Chemical Industry Co., Ltd.).

Examples of the metal powders include Fe-Si powder, Fe-Mn powder, Fe-Cr powder, magnetic iron powder and iron phosphide. Examples of commercially-available products of the metal powder include ferrosilicon (product name; manufactured by KINSEI MATEC CO., LTD.), ferromanganese (product name; manufactured by KINSEI MATEC CO., LTD.), ferrochrome (product name; manufactured by KINSEI MATEC CO., LTD.), iron sand powder (manufactured by KINSEI MATEC CO., LTD.) and Ferrophos 2132 (manufactured by Occidental Chemical Corporation).

An example of the carbon powders is carbon black used as a coloring pigment. Examples of commercially-available products of the carbon powder include Mitsubishi carbon black MA-100 (product name; manufactured by Mitsubishi Chemical Corporation).

The conductive pigments (C) may be used singly, or two or more kinds thereof may be used in combination.

The content of the conductive pigment (C), based on 100 parts by mass of the zinc dust (B), is preferably 5 to 100 parts by mass, more preferably 10 to 50 parts by mass, still more preferably 15 to 35 parts by mass. The content of (C) described above in the above range is preferable in terms of enhancing electric anticorrosive effect and improving rust prevention properties of the coating film.

In particular, when based on 100% by mass of the zinc dust (B), the flaky zinc-based powder (b-1) is used in an amount of 15 to 70% by mass and the spherical zinc-based powder (b-2) is used in an amount of 30 to 85% by mass, it is preferable that the content of the conductive pigment (C) in the coating composition is 15 to 35 parts by mass based on 100 parts by mass of the zinc dust (B).

It is preferable that the content of the conductive pigment (C) is more than 0% by mass and not more than 35% by mass and more preferably 10 to 20% by mass with respect to nonvolatile components in the coating composition. The content of (C) described above in the above range is preferable in terms of maintaining anticorrosiveness while reducing the content of the zinc dust (B) .

<Other Rust-Preventive Pigment>

The coating composition of the present invention may contain rust-preventive pigments other than the zinc dust (B) and the conductive pigment (C), in order to supplementarily ensure rust prevention properties of the coating film. Examples of such rust-preventive pigments include zinc phosphate-based compounds, calcium phosphate-based compounds, aluminum phosphate-based compounds, magnesium phosphate-based compounds, zinc phosphite-based compounds, calcium phosphite-based compounds, aluminum phosphite-based compounds, strontium phosphite-based compounds, aluminum tripolyphosphate-based compounds, zinc cyanamide-based compounds, boric acid salt compounds, nitro compounds and composite oxides.

Examples of commercially-available products of the rust-preventive pigments include zinc phosphate-based (aluminum) compound: LF BOWSEI CP-Z (product name; manufactured by KIKUCHI COLOR & CHEMICALS CORPORATION), zinc phosphite-based (calcium) compound: Protex YM-70 (product name; manufactured by Taihei Chemical Industrial Co., Ltd.), zinc phosphite-based (strontium) compound: Protex YM-92NS (product name; manufactured by Taihei Chemical Industrial Co., Ltd.), aluminum tripolyphosphate-based compound: K White #84 (product name; manufactured by TAYCA Corporation) and zinc cyanamide-based compound: LF BOWSEI ZK-32 (manufactured by KIKUCHI COLOR & CHEMICALS CORPORATION).

The rust-preventive pigments may be used singly, or two or more kinds thereof may be used in combination.

<Other Inorganic Powder>

The coating composition of the present invention may contain at least one inorganic powder selected from zinc compound powders (excluding zinc oxide, zinc phosphate-based compounds, zinc phosphite-based compounds and zinc cyanamide-based compounds), mineral powders, alkali glass powders, and pyrolysis gas-generating inorganic compound powders.

The zinc compound powders are considered to serve as controlling the activity of oxidation reaction such as the degree of ionization of the zinc dust (B) (production of $Zn^{2+}$). The inclusion of the zinc compound powders in the coating composition of the present invention can provide the composition with appropriate rust prevention properties. Examples of the zinc compound powders include powder of any of zinc chloride, zinc sulfide, zinc sulfate and the like. Examples of commercially-available products of the zinc compound powders include "Sachtolich HD (zinc sulfide; product name; manufactured by Sachleben Chemie GmbH)" and "Zinc Chloride" (manufactured by Nagai Chemical Industrial Co., Ltd.)".

Examples of the mineral powders include titanium mineral powder, silica powder, soda feldspar, potassium feldspar, zirconium silicate, wollastonite and diatomaceous earth. Examples of commercially-available products of the mineral powders include Rutile Flour S (manufactured by KINSEI MATEC CO., LTD.), Ilmenite Powder (manufactured by KINSEI MATEC CO., LTD.), A-PAX (manufactured by KINSEI MATEC CO., LTD.), Ceramic Powder OF-T (manufactured by KINSEI MATEC CO., LTD.), Aplite (manufactured by KINSEI MATEC CO., LTD.), Silica MC-O (manufactured by Maruo Calcium Co. , Ltd.), Barite BA (manufactured by Sakai Chemical Industry Co., Ltd.), Radiolite (manufactured by Showa Chemical Industry Co., Ltd.) and Celite 545 (manufactured by Johns Manville).

The alkali glass powders function such that alkali metal ions contained in the glass powders activate zinc and stabilize arc at the time of welding steel plates. Exemplary alkali glass powders are those prepared by crushing generally used plate glass or bottle glass to a size of about 5 μm to prepare glass powder and then acid-washing said glass powder so as to have pH of not more than 8. Examples of commercially-available products of the alkali glass powders include "APS-325" (manufactured by Pure Mick, Co., Ltd.).

The pyrolysis gas-generating inorganic compound powders are inorganic compound powders that undergo thermal decomposition (e.g., thermal decomposition at 500 to 1500°C) to generate a gas (e.g., $CO_2$, $F_2$). The inorganic compound powders are incorporated into a coating composition from which a coating film is formed, and when a steel plate having said coating film is welded in a melting pool, a bubble, generated from organic substances contained in binders and the like, is removed from the melting pool together with a gas derived from said inorganic compound powders. Examples of the inorganic compound powders include calcium fluoride, calcium carbonate, magnesium carbonate and strontium carbonate. Examples of commercially-available products of the inorganic compound powders include Fluorite 400-mesh (manufactured by KINSEI MATEC CO., LTD.), NS#400 (manufactured by NITTO FUNKA KOGYO K.K.), Magnesium Carbonate (manufactured by Tomita Pharmaceutical Co., Ltd.) and Strontium Carbonate A (manufactured by The Honjo Chemical Corporation).

<Molybdenum and Molybdenum Compound>

The coating composition of the present invention can contain either or both of molybdenum (metal molybdenum) and a molybdenum compound. These function as an antioxidant of zinc (as so-called a white-rust inhibitor).

Where a substrate coated with the coating composition of the present invention is exposed outdoors, it can happen that zinc or a zinc alloy present in the coating film reacts with water, oxygen or carbon dioxide gas whereby powdery white rust (mixture of zinc oxide, zinc hydroxide, zinc carbonate or the like) is formed on the surface of the coating film. When the surface of the coating film having white rust is coated with an overcoating film formed from an overcoating material, adhesion between these coating films can be lowered. To cope with such a problem, removal work to remove white rust formed on the rust-preventive coating film by appropriate means is needed prior to the application of the overcoating material, but such removal work can be never permitted depending upon the demand from customers and a specific purpose.

For less frequent occurrence of white rust, it is preferable that the coating composition of the present invention contains, as an antioxidant of zinc (so-called white rust inhibitor), either or both of molybdenum (metal molybdenum) and a molybdenum compound.

Examples of the molybdenum compound include molybdenum oxides such as molybdenum trioxide, molybdenum sulfide, molybdenum halides, molybdic acid, ammonium molybdate, phosphomolybdic acid, silicomolybdic acid, alkali metal salts of molybdic acid, alkali metal salts of phosphomolybdic acid, alkali metal salts of silicomolybdic acid, alkali earth metal salts of molybdic acid, alkali earth metal salts of phosphomolybdic acid, alkali earth metal salts of silicomolybdic acid, manganese salt of molybdic acid, manganese salt of phosphomolybdic acid, manganese salt of silicomolybdic acid, basic nitrogen-containing compound salts of molybdic acid, basic nitrogen-containing compound salts of phosphomolybdic acid, and basic nitrogen-containing compound salts of silicomolybdic acid.

The molybdenum compounds may be used singly, or two or more kinds thereof may be used in combination.

When either or both of molybdenum and a molybdenum compound are used, the total content of molybdenum and a molybdenum compound is preferably 0.05 to 5.0 parts by mass, more preferably 0.3 to 3. 0 parts by mass, still more preferably 0.5 to 2.0 parts by mass, based on 100 parts by mass of the zinc dust (B). When the content is the above range, sufficient zinc-antioxidization effect is achieved, the rust-preventive ability of the zinc dust (B) is prevented from decreasing, and the rust prevention properties of the coating film can be maintained.

<u><3. Additive></u>

The coating composition of the present invention may contain additives. The additives are materials used in order to improve or maintain the performance of coating materials and coating films. Examples of the additives include anti-settling agents, drying agents, fluidity control agents, antifoaming agents, dispersing agents, color-separation preventive agents, anti-skinning agents, plasticizers and ultraviolet absorbers.

The additives may be used singly, or two or more kinds thereof may be used in combination.

<u><Anti-Settling Agent></u>

Examples of the anti-settling agent include organic bentonite type, oxidized polyethylene type, humed silica type and amide type. Examples of commercially-available products of the anti-settling agents include TIXOGEL MPZ (product name; manufactured by Rockwood Clay Additives GmbH), Disparlon 4200-20 (product name; manufactured by Kusumoto Chemicals, Ltd.), Disparlon A630-20X (product name; manufactured by Kusumoto Chemicals, Ltd.) and AEROSIL 200 (product name; manufactured by Nippon Aerosil Co., Ltd.).

The anti-settling agents may be used singly, or two or more kinds thereof may be used in combination.

When the coating composition of the present invention is a two component-type composition described later, the content of the anti-settling agent is usually 0.5 to 5.0% by mass, preferably 1.5 to 4.0% by mass in a pigment paste component. The content of the anti-settling agent in the above range is preferable in terms of causing less precipitation of the pigment component and also in terms of workability at the time of mixing the pigment paste component with a main agent component.

<u><4. Organic Solvent></u>

The coating composition of the present invention preferably contains an organic solvent in terms of improving the dispersibility of the zinc dust (B) including the flaky zinc-based powder (b-1) and obtaining a coating film with excellent conformability and superior adhesion with respect to steel plates at the time of coating procedure.

Examples of the organic solvent include organic solvents commonly used in the field of coating materials, such as alcohol solvents, ester solvents, ketone solvents, aromatic solvents and glycol solvents.

Examples of the alcohol solvents include methanol, ethanol, propanol and butanol. Examples of the ester solvents include ethyl acetate and butyl acetate. Examples of the ketone solvents include methyl isobutyl ketone and cyclohexanone. Examples of the aromatic solvents include benzene, xylene and toluene. Examples of the glycol solvents include propylene glycol monomethyl ether and propylene glycol monomethyl ether acetate.

The organic solvents may be used singly, or two or more kinds thereof may be used in combination.

In the coating composition of the present invention, the content of the organic solvent is usually 30 to 90% by mass, preferably 40 to 85% by mass, more preferably 45 to 80% by mass. The coating composition of the present invention is preferably such an organic solvent-type composition as described above.

When the coating composition of the present invention is a two component-type composition described later, it is preferable that the content of the organic solvent in a coating material obtained by mixing a main agent component with a pigment paste component is controlled to be in the above range.

<Pigment Volume Concentration (PVC)>

The coating composition of the present invention satisfies the requirement that the pigment volume concentration (PVC) is 35 to 60%. PVC is preferably 37 to 55%, more preferably 40 to 52%. In the present invention, the pigment volume concentration (PVC) refers to a ratio (in terms of volume) of the pigment component and solid particles in additives relative to the nonvolatile components in the coating composition of the present invention, the ratio representing a concentration indicated in terms of percentage.

$$
\text{PVC = (Whole Volume of Pigment Component + Whole Volume of Solid Particles in Additives) / (Whole Volume of Nonvolatile Components of Coating Composition) ×100 [\%]}
$$

The term "nonvolatile components" refers to heating residues in the coating composition of the present invention that remain at the time of heating under the conditions described below, and is usually composed of the coating film-forming main element including the siloxane-based binder (A), the pigment component and solid particles in additives. The heating residues of the coating composition can be measured in accordance with JIS K5601 1-2 (heating temperature: 125°C, heating time: 60 minutes).

Examples of the "pigment component" are the zinc dust (B) such as the flaky zinc-based powder (b-1) and the spherical zinc-based powder (b-2), the conductive pigment (C) excluding (B) described above, rust-preventive pigments excluding (B) and (C) described above, inorganic powders excluding (B) and (C) described above, molybdenum and molybdenum compounds. Examples of the "additives" are anti-settling agents, drying agents, fluidity control agents, defoaming agents, dispersing agents, color-separation preventive agents, anti-skinning agents, plasticizers and ultraviolet absorbers.

For the calculation of PVC, from the mass of each component and its density, the volume of each component is calculated. For the siloxane-based binder (A), from the mass of the siloxane-based binder (A) in terms of $SiO_2$ and its density, its volume is calculated.

The coating composition of the present invention, as described above, may contain, as the pigment component, at least one selected from rust-preventive pigments, inorganic powders, molybdenum and molybdenum compounds. The contents of these components are not particularly limited as long as PVC is in the above range.

By defining the PVC of the coating composition of the present invention as being in the above range, coating films with an average dry film thickness of not more than 10 $\mu$m can be formed by using conventional coating machines under conventional coating conditions. By defining the PVC as being in the above range, the distance among particles of the pigment component in the coating films is appropriately maintained, so that the flaky zinc-based powder (b-1) has its planar surface oriented substantially in parallel to the surface of the coating film with the thickness direction of the flaky zinc-based powder (b-1) being the vertical direction of the substrate surface. The flaky zinc-based powder (b-1) usually has an extremely small thickness of not more than 1 $\mu$m in average, so that a thin coating film can be provided.

By the above configuration, the following can be achieved: (1) the coating material amount per coated area is reduced, and VOC emission amount per coated area is usually not more than 95 g/m$^2$: this hardly has adverse influence on environment, and moreover the zinc dust (B) content per coated area is usually not more than 36 g/m$^2$, which provides advantages in terms of conservation of resources; (2) the coating film after its long-term exposure retains excellent rust prevention properties, which are comparable to those of inorganic zinc primary rust-preventive coating materials that are currently prevalent; (3) the coating film has superior adhesion in overcoating, enabling various overcoating materials to be applied on the primary rust-preventive coating film of the present invention; and (4) the coating film is thin enough to increase the treatment speed in welding/cutting steel plates.

If PVC exceeds 60%, the distance among particles of the pigment component in the coating film cannot be appropriately maintained, so that the flaky zinc-based powder (b-1) fails to have its planar surface oriented substantially in parallel to the surface of the coating film. This makes the pigment components overlap one another, or causes the flaky zinc-based powder (b-1) to have its planar surface oriented in the vertical direction of the coating film surface. This makes it difficult to form a coating film having an average dry film thickness of not more than 10 $\mu$m in production using conventional coating machines under conventional coating conditions, resulting in the failure to provide thin films. If PVC is below 35%, the rust prevention properties of the coating film are poor.

<u>\<Preparation of Primary rust-preventive coating composition\></u>

The primary rust-preventive coating composition of the present invention is usually used as a two component-type composition. That is, the coating composition is usually composed of a main agent component (vehicle) and a pigment paste component. It is preferable that before use, the main agent component and the pigment paste component are separately stored, and immediately before use, these are sufficiently stirred and mixed with each other to prepare the primary rust-preventive coating material.

The main agent component usually contains the siloxane-based binder (A) and an organic solvent. The main agent component may be prepared by mixing the siloxane-based binder (A) with an organic solvent. Alternatively, the main agent component may be prepared by adding e.g., hydrochloric acid to a mixture solution of an organic solvent and at least one selected from alkylsilicates and methyltrialkoxysilanes, followed by stirring, to prepare a partial hydrolyzate condensate. The main agent component may contain such coating film-forming main elements as other binders excluding the siloxane-based binder (A).

The pigment paste component usually contains the zinc dust (B) including the flaky zinc-based powder (b-1) and an organic solvent. The pigment paste component is prepared, for example, by mixing the zinc dust (B) including the flaky zinc-based powder (b-1) with an organic solvent, and with another component as needed in accordance with a common method. Said another component is, for example, at least one selected from pigment components such as the conductive pigment (C), rust-preventive pigments, inorganic powders, molybdenum and molybdenum compounds and additives such as anti-settling agents.

The blending ratio between the main agent component and the pigment paste component can be appropriately determined such that after mixing, the content of the siloxane-based binder (A), the zinc dust (B) including the flaky zinc-based powder (b-1) and an organic solvent as well as PVC are within the above-described ranges.

[Primary Rust-Preventive Coating Film and Substrate with Primary Rust-preventive Coating Film]

A primary rust-preventive coating film of the present invention is formed from the above-described primary rust-preventive coating composition; and a substrate with a rust-preventive coating film of the present invention includes a substrate, e.g., a steel plate, and the primary rust-preventive coating film composed of the above-described primary rust-preventive coating composition that is formed on the surface of the substrate.

The primary rust-preventive coating film usually has an average dry film thickness of not more than 10 $\mu$m, preferably 5 to 9 $\mu$m, and has an average dry film thickness which may be more than 10 $\mu$m depending on applications. Hereinafter, a primary rust-preventive coating film having an average dry film thickness of not more than 10 $\mu$m is also referred to as the "thin film-type primary rust-preventive coating film". The average dry film thickness is measured by using an electromagnetic film thickness measuring instrument.

In the primary rust-preventive coating film, the zinc dust (B) content per coated area can be set usually at not more than 36 g/m$^2$, preferably 10 to 30 g/m$^2$. The zinc dust (B) content per coated area can be calculated from the content of the zinc dust (B) per unit volume of the coating film which is calculated from the content of zinc dust (B) incorporated in the coating material, and by using an average dry film thickness determined by such a measurement as described above.

[Substrate Rust Prevention Method and Method for Producing Substrate with Primary Rust-Preventive Coating Film]

A substrate rust prevention method and a method for producing a substrate with a primary rust-preventive coating film, according to the present invention, include a step of applying the above-described primary rust-preventive coating composition on a surface of a substrate such as a steel plate (coating step) and a step of curing the coating composition applied to form a primary rust-preventive coating film (curing step).

In the coating step, the coating composition of the present invention (in the case of a two component-type composition, a coating material obtained by mixing the main agent component with the pigment paste component) is applied, by a hitherto known method such as an air spray and an airless spray, on a surface of a substrate such as steel plates, to form an uncured coating film. A coating machine generally used in the application of the coating material in e.g., ship yards and iron works is primarily a line coating machine. In the line coating machine, the film thickness is controlled by coating conditions including line speed, coating pressure of an air spray and airless spray and so on provided within the coating machine, and the size of spray chips (aperture diameter).

In the curing step, the curing temperature (drying temperature) is usually 5 to 40°C, preferably 10 to 30°C; and drying time is usually 3 to 15 minutes, preferably 5 to 10 minutes. The present invention, using the siloxane-based binder (A) having Mw in the above range, enables the coating material to be cured at about room temperature as described above in a shorter period of time. Thus, the coating composition of the present invention is suited for steel-plate pretreatment carried out in processing steel plates of ships, marine structures, plants, bridges, overland tanks and the like.

Meanwhile, the attempt to form a thin film-type primary rust-preventive coating film from a conventional primary rust-preventive coating composition would require the discharge flow rate of a currently-available coating machine to be below a discharge flow rate limit allowing for stable coating procedure, and therefore uniform coating could not be conducted. Thus, this leads to the need for a coating material to be diluted with a large amount of an organic solvent thereby lowering the solid-content concentration of a coating material, consequently increasing VOC emission amount. Thus, as long as conventional primary rust-preventive coating compositions are used: (i) forming a thin film-type primary rust-preventive coating film without reducing VOC emission amount is difficult; (ii) a coating film even if obtained without considering VOC emission amount has reduced amount of binder per unit area of a steel plate surface, with the continuousness of the coating film lost and bare surface of some parts of the steel plate exposed, which causes a steel plate to rust in a short time period; and (iii) a coating film even if obtained without considering VOC emission amount has reduced amount of zinc content, thus having significantly lowered rust prevention properties after long-term exposure. From the foregoing reasons, the application of conventional primary rust-preventive coating compositions is conducted under coating conditions that allow the average dry film thickness to be, for example, 15 to 30 $\mu$m.

By contrast, as described above, the primary rust-preventive coating composition of the present invention has PVC defined in the specific range, in which case the distance among particles of the pigment component in the coating film is appropriately maintained. At this time, the flaky zinc-based powder (b-1) has its planar surface oriented substantially in parallel to the coating film surface, with the thickness direction of the flaky zinc-based powder (b-1) being the vertical direction of the substrate surface. The average thickness of the flaky zinc-based powder (b-1) is so thin, usually not more than 1 $\mu$m, that a thin coating film can be obtained. Thus, without reducing the discharge flow amount of the coating material from a coating machine, a thin film-type primary rust-preventive coating film can be stably formed without the problems (i)-(iii) described above.

In the present invention, when the substrate with the thin film-type primary rust-preventive coating film has been weld-treated, the probability is considerably low that weld bead has defects such as pits (through hole), blowholes (internal bubble), gas groove and wormholes. That is, the substrate with the thin film-type primary rust-preventive coating film of the present invention has attained improved rust prevention properties and weldability at the same time. Meanwhile, the primary rust-preventive coating film of the present invention, even if having an average dry film thickness of 10 $\mu$m or more as in conventional primary rust-preventive coating films, can exhibit excellent rust prevention properties.

Examples

Hereinafter, the present invention will be described more specifically with reference to Examples, but the present invention is in no way limited by these Examples. In the following section including Examples, "part(s)" means "part(s) by mass" unless otherwise noted.

[Preparation Example 1] Preparation of Alkylsilicate Condensate

31.5 g of Ethyl Silicate 40 (manufactured by COLCOAT CO., LTD.), 10.4 g of industrial ethanol, 5 g of deionized water, and 0.1 g of 35 mass% hydrochloric acid were introduced to a container, and stirred at 50°C for a period of time indicated in Table 1, and thereto 53 g of isopropyl alcohol was added. A solution containing any of alkylsilicate condensates 1 to 6 was thus prepared.

By gel permeation chromatography (GPC), the weight average molecular weights (Mw) of the condensates 1 to 6 were measured. GPC measurement conditions are as follows. A small amount of the condensate sample was collected and diluted with tetrahydrofuran. Further, the solution was filtered by using a membrane filter, to obtain a sample for GPC measurement.

Apparatus: 2695 separation module, manufactured by Nihon Waters K.K. (Alliance GPC Multisystem)
Column: TSKgel Super H4000 and TSKgel Super H2000, each of which is manufactured by Tosoh Corporation
Eluent: tetrahydrofuran (THF)
Flow rate: 0.6 ml/min
Detector: Shodex RI-104
Column thermostatic chamber temperature: 40°C
Standard substance: polystyrene

[Table 1]

Table 1

|  | Condensate 1 | Condensate 2 | Condensate 3 | Condensate 4 | Condensate 5 | Condensate 6 |
|---|---|---|---|---|---|---|
| Stirring Time | 3 hours | 8 hours | 15 minutes | 1 hour and 30 minutes | 4 hours and 40 minutes | 7 hours and 30 minutes |
| Weight Average Molecular Weight (Mw)of Alkylsilicate Condensate | 1500 | 6200 | 800 | 1100 | 2500 | 5800 |

[Preparation Example 2-1] Preparation of Pigment Paste Component 1

0.9 part of TIXOGEL MPZ (product name; manufactured by Rockwood Clay Additives GmbH) as an anti-settling agent; and 4.6 parts of xylene, 2.3 parts of butyl acetate and 2.3 parts of isobutyl alcohol as organic solvents were introduced into a polyethylene container, to which glass beads were added, and were shaken with a paint shaker for 3 hours. Subsequently, 18.2 parts of STANDART Zinc flake GTT (product name; manufactured by ECKART GmbH) as a flaky zinc powder was added, and the mixture was further shaken for 5 minutes to disperse the pigment component. Thereafter, by using an 80-mesh net, the glass beads were removed. A pigment paste component 1 was thus prepared.

[Preparation Example 2-2] Preparation of Pigment Paste Component 2

2.0 parts of TIXOGEL MPZ (product name; manufactured by Rockwood Clay Additives GmbH) as an anti-settling agent; and 58.0 parts of xylene, 10.0 parts of butyl acetate and 10.0 parts of isobutyl alcohol as organic solvents were introduced into a polyethylene container, to which glass beads were added, and were shaken with a paint shaker for 3 hours. Subsequently, 110.0 parts of F-2000 (product name; manufactured by The Honjo Chemical Corporation) as a spherical zinc powder was added. The mixture was further shaken for 5 minutes to disperse the pigment component. Thereafter, by using an 80-mesh net, the glass beads were removed. A pigment paste component 2 was thus prepared.

[Preparation Example 2-3] Preparation of Pigment Paste Component 3

Preparation Example 2-2 was repeated except that in Preparation Example 2-2, 170. 0 parts of xylene, 10.0 parts of butyl acetate and 10.0 parts of isobutyl alcohol were used as organic solvents. A pigment paste component 3 was thus prepared.

[Preparation Example 2-4] Preparation of Pigment Paste Component 4

Preparation Example 2-1 was repeated except that in Preparation Example 2-1, STANDART Zinc flake G (product name; manufactured by ECKART GmbH) was used as a flaky zinc powder. A pigment paste component 4 was thus prepared.

[Preparation Example 2-5] Preparation of Pigment Paste Component 5

Preparation Example 2-1 was repeated except that in Preparation Example 2-1, STANDART Zinc flake AT (product name; manufactured by ECKART GmbH) was used as a flaky zinc powder. A pigment paste component 5 was thus prepared.

[Preparation Example 2-6] Preparation of Pigment Paste Component 6

1.3 parts of TIXOGEL MPZ (product name; manufactured by Rockwood Clay Additives GmbH) as an anti-settling agent; and 6.3 parts of xylene, 3.1 parts of butyl acetate and 4.1 parts of isobutyl alcohol as organic solvents were introduced into a polyethylene container, to which glass beads were added, and were shaken with a paint shaker for 3 hours. Subsequently, 20.0 parts of STANDART Zinc flake GTT (product name; manufactured by ECKART GmbH) as a flaky zinc powder was added. The mixture was further shaken for 5 minutes to disperse the pigment component. Thereafter, by using an 80-mesh net, the glass beads were removed. A pigment paste component 6 was thus prepared.

[Preparation Example 2-7] Preparation of Pigment Paste Component 7

Preparation Example 2-6 was repeated except that in Preparation Example 2-6, STANDART Zinc flake GTT (product name; manufactured by ECKART GmbH) as a flaky zinc powder was replaced with F-2000 (product name; manufactured by The Honjo Chemical Corporation) as a spherical zinc powder. A pigment paste component 7 was thus prepared.

[Preparation Examples 2-8 and 2-9] Preparation of Pigment Paste Components 8 and 9

The Preparation Examples 2-6 and 2-7 were repeated except that in Preparation Examples 2-6 and 2-7, 4.0 parts of zinc oxide of JIS 3 grade (zinc oxide; manufactured by Hakusui Tech Co. , Ltd.) was used together with the zinc powder. Pigment paste components 8 and 9 were thus prepared.

[Preparation Example 2-10] Preparation of Pigment Paste Component 10

1.5 parts of TIXOGEL MPZ (product name; manufactured by Rockwood Clay Additives GmbH) as an anti-settling agent; and 7.5 parts of xylene, 3.8 parts of butyl acetate and 5.0 parts of isobutyl alcohol as organic solvents were introduced into a polyethylene container, to which glass beads were added, and were shaken with a paint shaker for 3 hours. Subsequently, 4.8 parts of STANDART Zinc flake GTT (product name; manufactured by ECKART GmbH) as a flaky zinc powder, 19.2 parts of F-2000 (product name; manufactured by The Honjo Chemical Corporation) as a spherical zinc powder, and 4. 8 parts of zinc oxide of JIS 3 grade (zinc oxide; manufactured by Hakusui Tech Co., Ltd.) as a conductive pigment were added. The mixture was further shaken for 5 minutes to disperse the pigment component. Thereafter, by using an 80-mesh net, the glass beads were removed. A pigment paste component 10 was thus prepared.

[Preparation Example 2-11] Preparation of Pigment Paste Component 11

Preparation Example 2-10 was repeated except that in Preparation Example 2-10, the blending amount of the conductive pigment was changed to 8 parts. A pigment paste component 11 was thus prepared.

[Examples 1A to 11A and Comparative Examples 1A to 16A]

Any of the solutions of the alkylsilicate condensates 1 to 6 as a main agent component was mixed with any of the pigment paste components 1 to 5 as a pigment paste component. The proportions of ingredients in any of the pigment paste components 1 to 5 and the proportion of any of the solutions of the condensates 1 to 6 are indicated in any of Table 1A to Table 3A (in terms of mass). A primary rust-preventive coating material was thus prepared.

[Examples 1B to 2B and Comparative Examples 1B to 2B]

The solution of the alkylsilicate condensate 1 as a main agent component was mixed with any of the pigment paste components 6 to 9 as a pigment paste component. The proportions of ingredients in any of the pigment paste components 6 to 9 and the proportion of the solution of the condensate 1 are indicated in Table 1B (in terms of mass). A primary rust-preventive coating material was thus prepared.

[Examples 1C to 6C and Comparative Examples 1C to 4C]

The solution of the alkylsilicate condensate 1 as a main agent component was mixed with the pigment paste component 10 or 11 as a pigment paste component. The proportions of ingredients of the pigment paste component 10 or 11 and the proportion of the solution of the condensate 1 are indicated in Table 1C (in terms of mass). A primary rust-preventive coating material was thus prepared.

[Examples 7C to 14C]

The solution of the alkylsilicate condensate 1 as a main agent component was mixed with a pigment paste containing a flaky zinc powder, a spherical zinc powder, a conductive pigment, an anti-settling agent and organic solvents. The proportions of the ingredients are indicated in Table 2C (in terms of mass). A primary rust-preventive coating material was thus prepared. The preparation of the pigment paste component was conducted in the same manner as in Preparation Example 2-10.

[Examples 15C to 19C and Comparative Examples 5C to 11C]

The solution of the alkylsilicate condensate 1 as a main agent component was mixed with a pigment paste component containing a flaky zinc powder, a spherical zinc powder, an anti-settling agent and organic solvent. The proportions of the ingredients are indicated in Table 3C (in terms of mass). A primary rust-preventive coating material was thus prepared. The preparation of the pigment paste component was conducted in the same manner as in Preparation Example 2-10.

[Examples 1D to 4D and Comparative Examples 1D to 2D]

50 g of the solution of the alkylsilicate condensate 1 (Mw of the condensate 1 = 1500) was collected and was blended, with stirring, with 3.1 g of S-LEC B BM-2 (manufactured by Sekisui Chemical Co., Ltd.), to prepare a solution. In the same manner, 41.0 g of the solution containing the condensate 1 was blended with 3.8 g of the above "S-LEC", to prepare a solution; and 38.0 g of the solution containing the condensate 1 was blended with 4.0 g of the above "S-LEC", to prepare a solution.

Subsequently, a main agent component indicated in Table 1D was mixed with a pigment paste component that had been prepared at a blending ratio indicated in Table 1D. The mixing ratio of the respective components is indicated in Table 1D (in terms of mass). A primary rust-preventive coating material was thus prepared.

Details of the respective components are as follows.

Solutions of alkylsilicate condensates 1 to 6: solutions obtained in Preparation Example 1 (in 100 g of each of the solutions obtained in Preparation Example 1, the content of any of the alkylsilicate condensates 1 to 6 in terms of $SiO_2$ = mass of Ethyl Silicate 40 (31.5 g) $\times$ mass concentration of Ethyl Silicate 40 in terms of $SiO_2$ (about 40% by mass) = 12.6 g; specific gravity of $SiO_2$ = 2.2 g/cm$^3$)

Polyvinyl butyral resin: S-LEC B BM-2 (manufactured by Sekisui Chemical Co., Ltd.)

Flaky zinc powder: STANDART Zinc flake GTT (manufactured by ECKART GmbH; specific gravity = 7.1 g/cm$^3$; median diameter (D50) = 17 $\mu$m, average thickness = 0.7 $\mu$m, aspect ratio (median diameter/average thickness) = 24; specific surface area = 1.67 m$^2$/g) (D50 is an average value of median diameters of three samples measured by using a laser scattering diffraction-type particle size distribution analyzer "SALD 2200" manufactured by Shimadzu Corporation. The samples were pretreated by adding a small amount of a neutral detergent into zinc powder and ultrasonically dispersing the powder for 5 minutes. Further, the pretreated samples were introduced to circulating water of the analyzer, which was ion exchange water to which a small amount of a neutral detergent had been added, and thereby their median diameters were measured. The dispersing time in this measurement was 1 minute.)

The average thickness was determined in such a manner as follows. A sample was attached on a cellophane tape, and the surface was observed by using a scanning electron microscope (SEM) "XL-30" (product name; manufactured by Philips). Thirty samples with their thickness direction being vertical to the observation direction were randomly selected. The thicknesses of their particles were measured, and an average value thereof was calculated. The specific surface area was measured by using "FlowSorb II 2300" (product name; manufactured by Shimadzu Corporation).

STANDART Zinc flake G (manufactured by ECKART GmbH; specific gravity = 7.1 g/cm$^3$; median diameter (D50) = 8.5 $\mu$m, average thickness = 0.4 $\mu$m, aspect ratio (median diameter/average thickness) = 21)

STANDART Zinc flake AT (manufactured by ECKART GmbH; specific gravity = 7.1 g/cm$^3$; median diameter (D50) = 20 $\mu$m, average thickness = 0.4 $\mu$m, aspect ratio (median diameter/average thickness) = 50)

Spherical zinc powder: F-2000 (manufactured by The Honjo Chemical Corporation; specific gravity = 7.1 g/cm$^3$; median diameter (D50) = 5 $\mu$m; specific surface area = 0.54 m$^2$/g)

Zinc oxide: zinc oxide of JIS 3 grade (manufactured by Hakusui Tech Co., Ltd.)

Anti-settling agent: TIXOGEL MPZ (manufactured by Rockwood Clay Additives GmbH; specific gravity = 1.7 g/cm$^3$)

[Calculation of Pigment Volume Concentration (PVC)]

An example of the calculation of PVC (Example 1A) is as follows.

$$PVC = (Whole\ Volume\ of\ Pigment\ Component\ +\ Whole\ Volume\ of$$

$$Solid\ Particles\ in\ Additives))/\ (Whole\ Volume\ of\ Nonvolatile$$

$$Components\ of\ Coating\ Composition)\ \times 100\ [\%]$$

$$= (18.2\ (g)/7.1\ (g/cm^3)\ +\ 0.9\ (g)/1.7\ (g/cm^3))\ /\ (12.6$$

$$(g)/2.2\ (g/cm^3)\ +\ 18.2\ (g)/7.1\ (g/cm^3)\ +\ 0.9\ (g)/1.7\ (g/cm^3))\ \times 100$$

$$[\%]$$

$$= 35\ [\%]$$

[Evaluation Method and Evaluation Criteria]

In such a manner that a coating film formed from a conventional primary rust-preventive coating material (coating material of Comparative Example 13A) would have an average dry film thickness of 15 $\mu$m, line conditions of a line coating machine (name of apparatus: conveyer coating machine for SP, manufactured by Takeuchi Kosakusho, Co., Ltd.) were adjusted (line speed: 10 m/min, coating pressure: 0.2 MPa). Under these line conditions, the primary rust-preventive coating material obtained in any of Examples and Comparative Examples was used to prepare a test plate under conditions described in (1) to (3) below, and subjected to evaluations (1) to (3) described below.

(1) Rust-Prevention Properties of Primary Rust-Preventive Coating Film (Rusting and White Rust)

A sandblasted surface of a sandblasted plate (JIS G3101, SS400, dimension: 150 mm $\times$ 70 mm $\times$ 2.3 mm) was coated with the primary rust-preventive coating material by using the line coating machine. Subsequently, in accordance with JIS K5600 1-6, the coated plate was dried in a thermostatic chamber at a temperature 23°C at a relative humidity of 50% for 1 week, to prepare a test plate composed of the primary rust-preventive coating film and the sandblasted plate. Tables provided below indicate the average dry film thickness of the primary rust-preventive coating film. The average dry film thickness was measured by using an electromagnetic film thickness measuring instrument "LE-370" (product name; manufactured by Kett Electric Laborary).
As a test plate for the evaluation of rust prevention properties after heating at 800°C, a test plate obtained by heating a test plate prepared in the same manner as described above at 800°C for 3 minutes in a muffle furnace "FM48" (product name; manufactured by Yamato Scientific Co., Ltd.) was used.
This test plate was set on an outdoor exposure stand (in the site of Otake Research Center of Chugoku Marine Paints, Ltd.) and allowed to stand for 2 months or for 3 months. Here, the test plate was fixed in such a manner that the coated surface of the test plate faced south and that the test plate was inclined at 45 degrees to the horizontal plane.
After the test plate was allowed to stand for 2 months or for 3 months, a percentage (%) of an area of the surface of the test plate having rusting and a percentage (%) of an area of the surface of the test plate having white rust, each relative to an area of the whole surface of the test plate, were measured to evaluate the state of rusting and the occurrence state of white rust. The evaluation criteria are as follows.

[Evaluation Criteria for State of Rusting (ASTM D610)]

10: Rusting is not observed, or rusting area percentage is not more than 0.01%.
9: Rusting is observed extremely slightly, or rusting area percentage is more than 0.01% and not more than 0.03%.
8: Rusting is observed slightly, or rusting area percentage is more than 0.03% and not more than 0.1%.
7: Rusting area percentage is more than 0.1% and not more than 0.3%.
6: Spot rusting is observed conspicuously, or rusting area percentage is more than 0.3% and not more than 1%.
5: Rusting area percentage is more than 1% and not more than 3%.
4: Rusting area percentage is more than 3% and not more than 10%.
3: Rusting area percentage is more than 10% and not more than 1/6 (16%).

2: Rusting area percentage is more than 1/6 (16%) and not more than 1/3 (33%).
1: Rusting area percentage is more than 1/3 (33%) and not more than 1/2 (50%).
0: Rusting area percentage is almost more than 1/2 (50%) and up to 100%.

[Evaluation Criteria for Occurrence State of White Rust]

10: White rust is not observed, or white rust area percentage is not more than 0.01%.
9: White rust is observed extremely slightly, or white rust area percentage is more than 0.01% and not more than 0.03%.
8: White rust is observed slightly, or white rust area percentage is more than 0.03% and not more than 0.1%.
7: White rust area percentage is more than 0.1% and not more than 0.3%.
6: White rust spots are observed conspicuously, or white rust area percentage is more than 0.3% and not more than 1%.
5: White rust area percentage is more than 1% and not more than 3%.
4: White rust area percentage is more than 3% and not more than 10%.
3: White rust area percentage is more than 10% and not more than 1/6 (16%).
2: White rust area percentage is more than 1/6 (16%) and not more than 1/3 (33%).
1: White rust area percentage is more than 1/3 (33%) and not more than 1/2 (50%).
0: White rust area percentage is almost more than 1/2 (50%) and up to 100%.

(2) Adhesion Property of Overcoating Film

A sandblasted surface of a sandblasted plate (JIS G3101, SS400, dimension: 150 mm $\times$ 70 mm $\times$ 2.3 mm) was coated with the primary rust-preventive coating material with the line coating machine. Subsequently, in accordance with JIS K5600 1-6, the coated plate was allowed to stand in a thermostatic chamber at a temperature of 23°C at a relative humidity of 50% for 1 week, to form a primary rust-preventive coating film with an average dry film thickness indicated in tables set forth below. On this primary rust-preventive coating film, a high-solid epoxy coating material (product name: NOVA 2000, manufactured by Chugoku Marine Paints, Ltd.) was applied with an air spray gun, and the coated plate was allowed to stand for 1 week, to form a cured coating film with a film thickness of 320 $\mu$m (overcoating film).
To a surface of the overcoating film, a bottom surface of a cylindrical mild-steel jig having a diameter of 16 mm (area: 2 cm$^2$) and a length of 20 mm was bonded with an epoxy adhesive, and they were allowed to stand for 24 hours. Thereafter, a head of the jig was pulled in the vertical direction of the overcoating film surface by using a pull gauge (manufactured by Motofuji Co., Ltd.) to peel the jig from the overcoating film surface, whereby an adhesive strength (force required for cohesive failure and/or interfacial peeling) was measured.

(3) Weldability Test

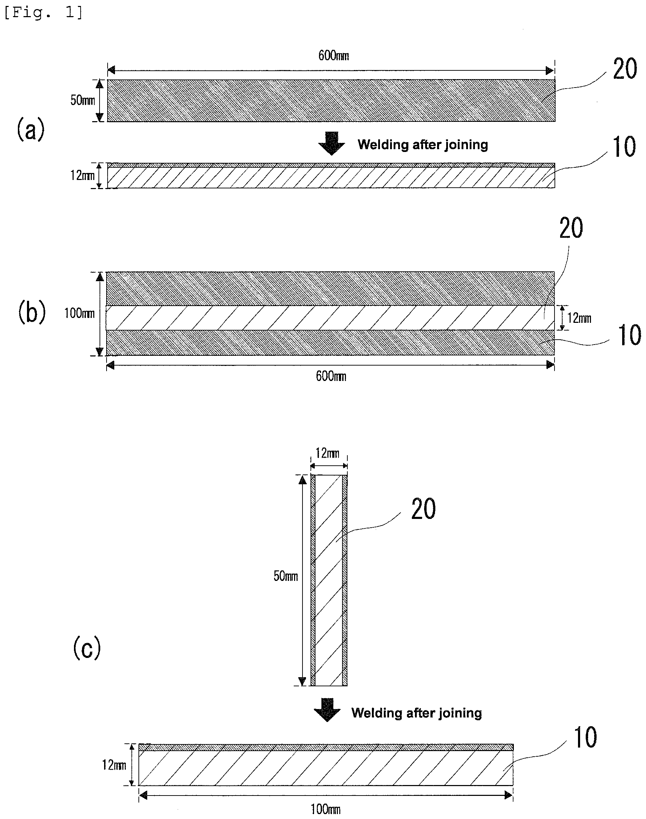

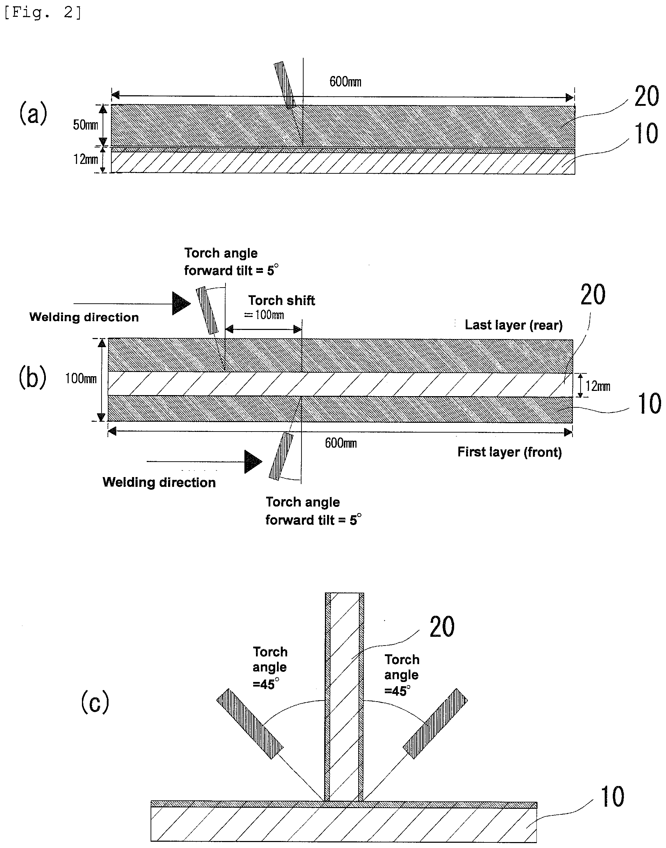

Surfaces of two sandblasted plates (JIS G3101, SS400, lower plate dimension: 600 mm $\times$ 100 mm $\times$ 12 mm, upper plate dimension: 600 mm $\times$ 50 mm $\times$ 12 mm) were coated with the primary rust-preventive coating material by using the line coating machine. Subsequently, in accordance with JIS K5600 1-6, the coated plate was allowed to stand in a thermostatic chamber at a temperature 23°C at a relative humidity of 50% for 1 week, whereby an upper plate and a lower plate as shown in Fig. 1(a) having an average dry film thickness indicated in Tables described below were prepared. In Figs. 1(a) to (c), shaded parts in the sandblasted plate represent parts that were coated.
Subsequently, by means of carbonic acid gas automatic arc welding, the upper plate and the lower plate were welded at the both layers (first layer side, last layer side) simultaneously while maintaining a given torch angle and a given torch shift, as shown in Fig. 2 (a) to (c). Welding conditions at this time are indicated in Table 2.
[Table 2]

Table 2

| Welding Method | Twin-Single Method |
|---|---|
| Welding Speed (mm/min) | 600 |
| Electric Current (A) | 320 |
| Voltage (V) | 32 |

(continued)

| Welding Method | Twin-Single Method |
|---|---|
| Welding Wire | MX Z-200, $\varphi$ 1.2 mm |
| Torch Angle | 45°, forward tilt 5° |
| Torch Shift (mm) | 100 |
| Wire Extension Length (mm) | 25 |
| Route Gap | 0 |

Subsequently, weldability was evaluated in the following manner.

First, the number of pits formed in the region of a length of 500 mm of the welded portion, except the region of each length of 50 mm of the welding start portion and the welding end portion including the tack weld portion before welding, and a length (mm) of a gas groove were checked. Further, under welding conditions described in Table 2, a laser notch (V-shaped cut) was made on the weldline on the first layer side, and the last layer side welded portion was fractured by using a press along the weldline. Then, the total area of blowholes occurring on the fractured surface (width of blowholes $\times$ length of blowholes $\times$ number of blowholes) was divided by an evaluation area to determine a blowhole occurrence percentage (%).

[Table 1A]

Table 1A

| | | | Comp.Ex.1A | Comp.Ex.2A | Comp.Ex.3A | Comp.Ex.4A | Comp.Ex.5A | Comp.Ex.6A |
|---|---|---|---|---|---|---|---|---|
| Composition of Coating material | Main Agent Component | Solution of Alkylsilicate Condensate 1 (Mw=1500) | 100.0 | 100.0 | 100.0 | 100.0 | 100.0 | 100.0 |
| | | Solution of Alkylsilicate Condensate 2 (Mw=6200) | | | | | | |
| | | Solution of Alkylsilicate Condensate 3 (Mw=800) | | | | | | |
| | Pigment Paste Component | Pigment Paste Component No. | 1 | 1 | 1 | 1 | 1 | 1 |
| | | Flaky Zinc Powder — STANDART Zinc flake GTT | 1.8 | 3.8 | 6.0 | 8.5 | 11.3 | 14.5 |
| | | Spherical Zinc Powder — F-2000 | | | | | | |
| | | Anti-Settling Agent — TIXOGEL MPZ | 0.1 | 0.2 | 0.3 | 0.4 | 0.6 | 0.7 |
| | | Organic Solvent — Xylene | 0.5 | 1.0 | 1.5 | 2.1 | 2.8 | 3.6 |
| | | Organic Solvent — Butyl Acetate | 0.2 | 0.5 | 0.8 | 1.1 | 1.4 | 1.8 |
| | | Organic Solvent — Isobutyl Alcohol | 0.2 | 0.5 | 0.8 | 1.1 | 1.4 | 1.8 |
| | Total (in terms of mass) | | 103 | 106 | 109 | 113 | 118 | 122 |
| Properties of Coating Material | | Volume of Nonvolatile Components (cm$^3$) | 6.0 | 6.4 | 6.7 | 7.2 | 7.7 | 8.2 |
| | | Volume of Pigment Component (cm$^3$) | 0.3 | 0.5 | 0.8 | 1.2 | 1.6 | 2.0 |
| | | Volume of Solid Particles of Additive (cm$^3$) | 0.1 | 0.1 | 0.2 | 0.3 | 0.3 | 0.4 |
| | | Pigment Volume Concentration (PVC) (%) | 5 | 10 | 15 | 20 | 25 | 30 |
| | | Amount of Zinc Powder (B) in Nonvolatile Components in Coating Composition (% by mass) | 12 | 23 | 32 | 39 | 46 | 52 |
| | | (B)/(A) <Zn/SiO$_2$> (mass ratio) | 0.1 | 0.3 | 0.5 | 0.7 | 0.9 | 1.2 |
| | | (b-1)/(A) <Flaky Zinc-based Powder/SiO$_2$> (mass ratio) | 0.1 | 0.3 | 0.5 | 0.7 | 0.9 | 1.2 |
| | | (b-2)/(A) <Spherical Zinc-based Powder/SiO$_2$> (mass ratio) | 0.0 | 0.0 | 0.0 | 0.0 | 0.0 | 0.0 |
| | | Amount of Flakey Zinc-based Powder (b-1) in Zinc Powder (B) (% by mass) | 100.0 | 100.0 | 100.0 | 100.0 | 100.0 | 100.0 |
| | | Amount of Spherical Zinc-based Powder (b-2) in Zinc Powder (B) (% by mass) | 0.0 | 0.0 | 0.0 | 0.0 | 0.0 | 0.0 |
| | | Amount of Zinc Powder (B) per Coated Area (g/m$^2$) | 2.1 | 6.0 | 8.0 | 8.3 | 11.8 | 14.2 |
| | | Amount of Conductive Pigment (C) in Nonvolatile Components in Coating Composition (% by mass) | 0.0 | 0.0 | 0.0 | 0.0 | 0.0 | 0.0 |
| | | VOC amount per Coated Area (g/m$^2$) | 102.4 | 140.1 | 120.6 | 89.4 | 97.3 | 92.4 |
| Coating Film Properties | Primary Rust-Preventive Properties | Average Dry Film Thickness (μm) | 7 | 10 | 9 | 7 | 8 | 8 |
| | | Outdoor Exposure (2 months after) — Rusting | 1 | 2 | 3 | 3 | 4 | 5 |
| | | Outdoor Exposure (2 months after) — White Rust | 10 | 10 | 10 | 10 | 10 | 10 |
| | Overcoatability | Adhesion Strength (MPa) | 5.3 | 4.8 | 5.5 | 4.7 | 5.1 | 3.6 |
| Weldability (welding speed = 600 mm/min) | First Layer Side Bead | Pits (Number of Pits) | 0 | 0 | 0 | 0 | 0 | 0 |
| | | Gas Groove (mm) | 0 | 0 | 0 | 0 | 0 | 0 |
| | Last Layer Side Bead | Pits (Number of Pits) | 0 | 0 | 0 | 0 | 0 | 0 |
| | | Gas Groove (mm) | 0 | 0 | 0 | 0 | 0 | 0 |
| | | Blowhole Occurrence Percentage (%) | 0.1 | 0.1 | 0.1 | 0.1 | 0.2 | 0.5 |

EP 2 876 144 B1

Table 1A (continued)

| | | | | Ex.1A | Ex.2A | Ex.3A | Ex.4A | Ex.5A | Ex.6A |
|---|---|---|---|---|---|---|---|---|---|
| Composition of Coating material | Main Agent Component | Solution of Alkylsilicate Condensate 1 (Mw=1500) | | 100.0 | 100.0 | 100.0 | 100.0 | 100.0 | 100.0 |
| | | Solution of Alkylsilicate Condensate 2 (Mw=6200) | | | | | | | |
| | | Solution of Alkylsilicate Condensate 3 (Mw=800) | | | | | | | |
| | Pigment Paste Component | Pigment Paste Component No. | | 1 | 1 | 1 | 1 | 1 | 1 |
| | | Flaky Zinc Powder | STANDART Zinc flake GTT | 18.2 | 22.6 | 27.7 | 33.8 | 41.4 | 50.7 |
| | | Spherical Zinc Powder | F-2000 | | | | | | |
| | | Anti-Settling Agent | TIXOGEL MPZ | 0.9 | 1.1 | 1.4 | 1.7 | 2.1 | 2.5 |
| | | Organic Solvent | Xylene | 4.6 | 5.7 | 6.9 | 8.5 | 10.4 | 12.7 |
| | | | Butyl Acetate | 2.3 | 2.8 | 3.5 | 4.2 | 5.2 | 6.3 |
| | | | Isobutyl Alcohol | 2.3 | 2.8 | 3.5 | 4.2 | 5.2 | 6.3 |
| | Total (in terms of mass) | | | 128 | 135 | 143 | 152 | 164 | 179 |
| Properties of Coating Material | | Volume of Nonvolatile Components (cm³) | | 8.8 | 9.6 | 10.4 | 11.5 | 12.8 | 14.4 |
| | | Volume of Pigment Component (cm³) | | 2.6 | 3.2 | 3.9 | 4.8 | 5.8 | 7.1 |
| | | Volume of Solid Particles of Additive (cm³) | | 0.5 | 0.7 | 0.8 | 1.0 | 1.2 | 1.5 |
| | | Pigment Volume Concentration (PVC) (%) | | 35 | 40 | 45 | 50 | 55 | 60 |
| | | Amount of Zinc Powder (B) in Nonvolatile Components in Coating Composition (% by mass) | | 57 | 62 | 66 | 70 | 74 | 77 |
| | | (B)/(A) <Zn/SiO₂> (mass ratio) | | 1.4 | 1.8 | 2.2 | 2.7 | 3.3 | 4.0 |
| | | (b-1)/(A) <Flaky Zinc-based Powder/SiO₂> (mass ratio) | | 1.4 | 1.8 | 2.2 | 2.7 | 3.3 | 4.0 |
| | | (b-2)/(A) <Spherical Zinc-based Powder/SiO₂> (mass ratio) | | 0.0 | 0.0 | 0.0 | 0.0 | 0.0 | 0.0 |
| | | Amount of Flakey Zinc-based Powder (b-1) in Zinc Powder (B) (% by mass) | | 100.0 | 100.0 | 100.0 | 100.0 | 100.0 | 100.0 |
| | | Amount of Spherical Zinc-based Powder (b-2) in Zinc Powder (B) (% by mass) | | 0.0 | 0.0 | 0.0 | 0.0 | 0.0 | 0.0 |
| | | Amount of Zinc Powder (B) per Coated Area (g/m²) | | 16.5 | 21.2 | 23.9 | 29.4 | 32.4 | 35.3 |
| | | Amount of Conductive Pigment (C) in Nonvolatile Components in Coating Composition (% by mass) | | 0.0 | 0.0 | 0.0 | 0.0 | 0.0 | 0.0 |
| | | VOC amount per Coated Area (g/m²) | | 87.5 | 92.8 | 87.3 | 90.8 | 84.6 | 78.5 |
| Coating Film Properties | Primary Rust-Preventive Properties | Average Dry Film Thickness (μm) | | 8 | 9 | 9 | 10 | 10 | 10 |
| | | Outdoor Exposure (2 months after) | Rusting | 9 | 10 | 10 | 10 | 10 | 10 |
| | | | White Rust | 10 | 10 | 10 | 10 | 10 | 10 |
| | Overcoatability | Adhesion Strength (MPa) | | 5.8 | 6.2 | 5.5 | 4.7 | 5.3 | 2.4 |
| Weldability (welding speed = 600 mm/min) | First Layer Side Bead | Pits (Number of Pits) | | 0 | 0 | 0 | 0 | 0 | 0 |
| | | Gas Groove (mm) | | 0 | 0 | 0 | 0 | 0 | 0 |
| | Last Layer Side Bead | Pits (Number of Pits) | | 0 | 0 | 0 | 0 | 0 | 0 |
| | | Gas Groove (mm) | | 0 | 0 | 0 | 0 | 0 | 0 |
| | | Blowhole Occurrence Percentage (%) | | 1.2 | 2.8 | 4.3 | 7.2 | 9.2 | 9.9 |

[Table 2A]                                                    Table 2A

| | | | Comp.Ex.7A | Comp.Ex.8A | Comp.Ex.9A | Comp.Ex.10A | Comp.Ex.11A | Comp.Ex.12A |
|---|---|---|---|---|---|---|---|---|
| Composition of Coating material | Main Agent Component | Solution of Alkylsilicate Condensate 1 (Mw=1500) | 100.0 | 100.0 | 100.0 | 100.0 | 100.0 | 100.0 |
| | | Solution of Alkylsilicate Condensate 2 (Mw=6200) | | | | | | |
| | | Solution of Alkylsilicate Condensate 3 (Mw=800) | | | | | | |
| | Pigment Paste Component | Pigment Paste Component No. | 1 | 1 | 1 | 1 | 1 | 1 |
| | | Flaky Zinc Powder — STANDART Zinc flake GTT | 63.0 | 79.0 | 101.5 | 135.0 | 192.0 | 304.0 |
| | | Spherical Zinc Powder — F-2000 | | | | | | |
| | | Anti-Settling Agent — TIXOGEL MPZ | 3.2 | 4.0 | 5.1 | 6.8 | 9.6 | 15.2 |
| | | Organic Solvent — Xylene | 15.8 | 19.8 | 25.4 | 33.8 | 48.0 | 76.0 |
| | | Organic Solvent — Butyl Acetate | 7.9 | 9.9 | 12.7 | 16.9 | 24.0 | 38.0 |
| | | Organic Solvent — Isobutyl Alcohol | 7.9 | 9.9 | 12.7 | 16.9 | 24.0 | 38.0 |
| | Total (in terms of mass) | | 198 | 222 | 257 | 309 | 398 | 571 |
| Properties of Coating Material | | Volume of Nonvolatile Components ($cm^3$) | 16.5 | 19.2 | 23.0 | 28.7 | 38.4 | 57.5 |
| | | Volume of Pigment Component ($cm^3$) | 8.9 | 11.1 | 14.3 | 19.0 | 27.0 | 42.8 |
| | | Volume of Solid Particles of Additive ($cm^3$) | 1.9 | 2.3 | 3.0 | 4.0 | 5.6 | 8.9 |
| | | Pigment Volume Concentration (PVC) (%) | 65 | 70 | 75 | 80 | 85 | 90 |
| | | Amount of Zinc Powder (B) in Nonvolatile Components in Coating Composition (% by mass) | 80 | 83 | 85 | 87 | 90 | 92 |
| | | (B)/(A) <$Zn/SiO_2$> (mass ratio) | 5.0 | 6.3 | 8.1 | 10.7 | 15.2 | 24.1 |
| | | (b-1)/(A) <Flaky Zinc-based Powder/$SiO_2$> (mass ratio) | 5.0 | 6.3 | 8.1 | 10.7 | 15.2 | 24.1 |
| | | (b-2)/(A) <Spherical Zinc-based Powder/$SiO_2$> (mass ratio) | 0.0 | 0.0 | 0.0 | 0.0 | 0.0 | 0.0 |
| | | Amount of Flakey Zinc-based Powder (b-1) in Zinc Powder (B) (% by mass) | 100.0 | 100.0 | 100.0 | 100.0 | 100.0 | 100.0 |
| | | Amount of Spherical Zinc-based Powder (b-2) in Zinc Powder (B) (% by mass) | 0.0 | 0.0 | 0.0 | 0.0 | 0.0 | 0.0 |
| | | Amount of Zinc Powder (B) per Coated Area ($g/m^2$) | 49.8 | 53.6 | 57.3 | 61.1 | 90.0 | 89.9 |
| | | Amount of Conductive Pigment (C) in Nonvolatile Components in Coating Composition (% by mass) | 0.0 | 0.0 | 0.0 | 0.0 | 0.0 | 0.0 |
| | | VOC amount per Coated Area ($g/m^2$) | 93.9 | 86.0 | 78.1 | 70.1 | 85.9 | 70.8 |
| Coating Film Properties | Primary Rust-Preventive Properties | Average Dry Film Thickness (μm) | 13 | 13 | 13 | 13 | 18 | 17 |
| | | Outdoor Exposure (2 months after) — Rusting | 10 | 10 | 10 | 10 | 10 | 10 |
| | | Outdoor Exposure (2 months after) — White Rust | 10 | 10 | 10 | 9 | 9 | 9 |
| | Overcoatability | Adhesion Strength (MPa) | 1.0 | 1.0 | 0.5 | 0.6 | 1.4 | 1.0 |
| Weldability (welding speed = 600 mm/min) | First Layer Side Bead | Pits (Number of Pits) | 0 | 0 | 0 | 0 | 0 | 0 |
| | | Gas Groove (mm) | 0 | 0 | 0 | 0 | 0 | 0 |
| | Last Layer Side Bead | Pits (Number of Pits) | 0 | 0 | 0 | 0 | 1 | 1 |
| | | Gas Groove (mm) | 0 | 0 | 0 | 0 | 0 | 0 |
| | | Blowhole Occurrence Percentage (%) | 11.7 | 13.9 | 16.5 | 23.1 | 26.5 | 35.8 |

Table 2A (continued)

| | | | Comp.Ex.13A | Comp.Ex.14A | Comp.Ex.15A | Comp.Ex.16A |
|---|---|---|---|---|---|---|
| Composition of Coating material | Main Agent Component | Solution of Alkylsilicate Condensate 1 (Mw=1500) | 100.0 | 100.0 | | |
| | | Solution of Alkylsilicate Condensate 2 (Mw=6200) | | | 100.0 | |
| | | Solution of Alkylsilicate Condensate 3 (Mw=800) | | | | 100.0 |
| | Pigment Paste Component | Pigment Paste Component No. | 2 | 3 | 1 | 1 |
| | | Flaky Zinc Powder — STANDART Zinc flake GTT | | | 27.7 | 27.7 |
| | | Spherical Zinc Powder — F-2000 | 110.0 | 110.0 | | |
| | | Anti-Settling Agent — TIXOGEL MPZ | 2.0 | 2.0 | 1.4 | 1.4 |
| | | Organic Solvent — Xylene | 58.0 | 170.0 | 6.9 | 6.9 |
| | | Organic Solvent — Butyl Acetate | 10.0 | 10.0 | 3.5 | 3.5 |
| | | Organic Solvent — Isobutyl Alcohol | 10.0 | 10.0 | 3.5 | 3.5 |
| | Total (in terms of mass) | | 290 | 402 | 143 | 143 |
| Properties of Coating Material | | Volume of Nonvolatile Components (cm$^3$) | 22.4 | 22.4 | 10.4 | 10.4 |
| | | Volume of Pigment Component (cm$^3$) | 15.5 | 15.5 | 3.9 | 3.9 |
| | | Volume of Solid Particles of Additive (cm$^3$) | 1.2 | 1.2 | 0.8 | 0.8 |
| | | Pigment Volume Concentration (PVC) (%) | 74 | 74 | 45 | 45 |
| | | Amount of Zinc Powder (B) in Nonvolatile Components in Coating Composition (% by mass) | 88 | 88 | 66 | 66 |
| | | (B)/(A) <Zn/SiO$_2$> (mass ratio) | 8.7 | 8.7 | 2.2 | 2.2 |
| | | (b-1)/(A) <Flaky Zinc-based Powder/SiO$_2$> (mass ratio) | 0.0 | 0.0 | 2.2 | 2.2 |
| | | (b-2)/(A) <Spherical Zinc-based Powder/SiO$_2$> (mass ratio) | 8.7 | 8.7 | 0.0 | 0.0 |
| | | Amount of Flakey Zinc-based Powder (b-1) in Zinc Powder (B) (% by mass) | 0.0 | 0.0 | 100.0 | 100.0 |
| | | Amount of Spherical Zinc-based Powder (b-2) in Zinc Powder (B) (% by mass) | 100.0 | 100.0 | 0.0 | 0.0 |
| | | Amount of Zinc Powder (B) per Coated Area (g/m$^2$) | 73.7 | 39.3 | 23.9 | 23.9 |
| | | Amount of Conductive Pigment (C) in Nonvolatile Components in Coating Composition (% by mass) | 0.0 | 0.0 | 0.0 | 0.0 |
| | | VOC amount per Coated Area (g/m$^2$) | 110.8 | 99.1 | 87.3 | 87.3 |
| Coating Film Properties | Primary Rust-Preventive Properties | Average Dry Film Thickness (μm) | 15 | 8 | 9 | 9 |
| | | Outdoor Exposure (2 months after) — Rusting | 10 | 6 | 6 | 6 |
| | | Outdoor Exposure (2 months after) — White Rust | 6 | 10 | 10 | 10 |
| | Overcoatability | Adhesion Strength (MPa) | 5.1 | 4.5 | 4.2 | 4.1 |
| Weldability (welding speed = 600 mm/min) | First Layer Side Bead | Pits (Number of Pits) | 0 | 0 | 0 | 0 |
| | | Gas Groove (mm) | 0 | 0 | 0 | 0 |
| | Last Layer Side Bead | Pits (Number of Pits) | 0 | 0 | 0 | 1 |
| | | Gas Groove (mm) | 0 | 0 | 0 | 0 |
| | | Blowhole Occurrence Percentage (%) | 24.5 | 10.4 | 6.3 | 10.1 |

EP 2 876 144 B1

23

Table 3A

| Composition of Coating material | | | | Ex.7A | Ex.3A | Ex.8A | Ex.9A | Ex.10A | Ex.11A |
|---|---|---|---|---|---|---|---|---|---|
| | Main Agent Component | Solution of Alkylsilicate Condensate 1 (Mw=1500) | | | 100.0 | | | 100.0 | 100.0 |
| | | Solution of Alkylsilicate Condensate 4 (Mw=1100) | | 100.0 | | | | | |
| | | Solution of Alkylsilicate Condensate 5 (Mw=2500) | | | | 100.0 | | | |
| | | Solution of Alkylsilicate Condensate 6 (Mw=5800) | | | | | 100.0 | | |
| | Pigment Paste Component | Pigment Paste Component No. | | 1 | 1 | 1 | 1 | 4 | 5 |
| | | Flaky Zinc Powder | STAN DART Zinc flake GTT | 27.7 | 27.7 | 27.7 | 27.7 | | |
| | | | STANDART Zinc flake G | | | | | 27.7 | |
| | | | STANDART Zinc flake AT | | | | | | 27.7 |
| | | Spherical Zinc Powder | F-2000 | | | | | | |
| | | Anti-Settling Agent | TIXOGEL MPZ | 1.4 | 1.4 | 1.4 | 1.4 | 1.4 | 1.4 |
| | | Organic Solvent | Xylene | 6.9 | 6.9 | 6.9 | 6.9 | 6.9 | 6.9 |
| | | | Butyl Acetate | 3.5 | 3.5 | 3.5 | 3.5 | 3.5 | 3.5 |
| | | | Isobutyl Alcohol | 3.5 | 3.5 | 3.5 | 3.5 | 3.5 | 3.5 |
| | Total (in terms of | mass) | | 143 | 143 | 143 | 143 | 143 | 143 |

(continued)

| | | | Ex.7A | Ex.3A | Ex.8A | Ex.9A | Ex.10A | Ex.11A |
|---|---|---|---|---|---|---|---|---|
| Properties of Coating Material | | Volume of Nonvolatile Components (cm$^3$) | 10.4 | 10.4 | 10.4 | 10.4 | 10.4 | 10.4 |
| | | Volume of Pigment Component (cm$^3$) | 3.9 | 3.9 | 3.9 | 3.9 | 3.9 | 3.9 |
| | | Volume of Solid Particles of Additive (cm$^3$) | 0.8 | 0.8 | 0.8 | 0.8 | 0.8 | 0.8 |
| | | Pigment Volume Concentration (PVC) (%) | 45 | 45 | 45 | 45 | 45 | 45 |
| | | Amount of Zinc Powder (B) in Nonvolatile Components in Coating Composition (% by mass) | 66 | 66 | 66 | 66 | 66 | 66 |
| | | (B)/(A) <Zn/SiO$_2$> (mass ratio) | 2.2 | 2.2 | 2.2 | 2.2 | 2.2 | 2.2 |
| | | (b-1)/(A) <Flaky Zinc-based Powder/SiO$_2$> (mass ratio) | 2.2 | 2.2 | 2.2 | 2.2 | 2.2 | 2.2 |
| | | (b-2)/(A) <Spherical Zinc-based Powder/SiO$_2$> (mass ratio) | 0.0 | 0.0 | 0.0 | 0.0 | 0.0 | 0.0 |
| | | Amount of Flakey Zinc-based Powder (b-1) in Zinc Powder (B) (% by mass) | 100.0 | 100.0 | 100.0 | 100.0 | 100.0 | 100.0 |
| | | Amount of Spherical Zinc-based Powder (b-2) in Zinc Powder (B) (% by mass) | 0.0 | 0.0 | 0.0 | 0.0 | 0.0 | 0.0 |
| | | Amount of Zinc Powder (B) per Coated Area (g/m$^2$) | 23.9 | 23.9 | 23.9 | 23.9 | 23.9 | 23.9 |
| | | Amount of Conductive Pigment (C) in Nonvolatile Components in Coating Composition (% by mass) | 0.0 | 0.0 | 0.0 | 0.0 | 0.0 | 0.0 |
| | | VOC amount per Coated Area (g/m$^2$) | 87.3 | 87.3 | 87.3 | 87.3 | 87.3 | 87.3 |
| Coating Film Properties | Primary Rust-Preventive Properties | Average Dry Film Thickness ($\mu$m) | 9 | 9 | 9 | 9 | 9 | 9 |
| | | Outdoor Exposure (2 months after) — Rusting | 9 | 10 | 10 | 9 | 10 | 10 |
| | | Outdoor Exposure (2 months after) — White Rust | 10 | 10 | 10 | 10 | 10 | 10 |
| | Overcoatability | Adhesion Strength (MPa) | 4.9 | 5.5 | 5.8 | 5.3 | 5.8 | 5.2 |

(continued)

| | | | Ex.7A | Ex.3A | Ex.8A | Ex.9A | Ex.10A | Ex.11A |
|---|---|---|---|---|---|---|---|---|
| Weldability (welding speed = 600 mm/min) | First Layer Side Bead | Pits (Number of Pits) | 0 | 0 | 0 | 0 | 0 | 0 |
| | | Gas Groove (mm) | 0 | 0 | 0 | 0 | 0 | 0 |
| | Last Layer Side Bead | Pits (Number of Pits) | 0 | 0 | 0 | 0 | 0 | 0 |
| | | Gas Groove (mm) | 0 | 0 | 0 | 0 | 0 | 0 |
| | | Blowhole Occurrence Percentage (%) | 7.8 | 4.3 | 4.6 | 5.2 | 4.4 | 4.0 |

[Evaluation of Examples and Comparative Examples]

From Table 1A to Table 3A, the following has been made clear.

The average dry film thickness was not more than 10 $\mu$m when PVC was not more than 60%, but was more than 10 $\mu$m when PVC was not less than 65% (Comparative Examples 7A to 13A). That is, it has been found that defining PVC as being not more than 60% results in the provision of coating films having a thickness of not more than 10 $\mu$m even under conventional coating conditions.

The rust-preventive properties were superior when PVC was not less than 35%, but were poor when PVC was not more than 30% (Comparative Examples 1A to 6A). The test plate obtained by applying a conventional primary rust-preventive coating material so as to provide an average dry film thickness of 8 $\mu$m (Comparative Example 14A) had inferior and poor rust-preventive properties. In the embodiments of the primary rust-preventive coating materials containing the alkylsilicate condensate 2 or 3 (Comparative Examples 15A and 16A), rust-preventive properties were poor.

Regarding overcoatability, the adhesion strength was sufficient, being not less than 2.4 MPa, when PVC was not more than 60%, but the adhesion strength was insufficient, being not more than 1.0 MPa, when PVC was not less than 65% (Comparative Examples 7A to 12A).

Regarding weldability, the blowhole occurrence percentage was superior, being not more than 10%, when PVC was not more than 60%, but the blowhole occurrence percentage was poor, being more than 10%, when PVC was not less than 65% (Comparative Examples 7A to 14A). In the embodiment of the primary rust-preventive coating material containing the alkylsilicate condensate 3 (Comparative Example 16A), the blowhole occurrence percentage was poor, being more than 10%.

[Table 1B]

Table 1B

| | | | Ex.1B | Comp.Ex.1B | Ex.2B | Comp.Ex.2B |
|---|---|---|---|---|---|---|
| Composition of Coating material | Main Agent Component | Solution of Alkylsilicate Condensate 1 (Mw=1500) | 100 | 100 | 100 | 100 |
| | Pigment Paste Component | No. | 6 | 7 | 8 | 9 |
| | Pigment Paste Component | Flaky Zinc Powder — STANDART Zinc flake GTT | 20.0 | | 20.0 | |
| | | Spherical Zinc Powder — F-2000 | | 20.0 | | 20.0 |
| | | Conductive Pigment — zinc oxide of JIS 3 grade | | | 4.0 | 4.0 |
| | | Anti-Settling Agent — TIXOGEL MPZ | 1.3 | 1.3 | 1.3 | 1.3 |
| | | Organic Solvent — Xylene | 6.3 | 6.3 | 6.3 | 6.3 |
| | | Butyl Acetate | 3.1 | 3.1 | 3.1 | 3.1 |
| | | Isobutyl Alcohol | 4.1 | 4.1 | 4.1 | 4.1 |
| | Total (in terms of mass) | | 134.8 | 134.8 | 138.8 | 138.8 |

(continued)

| Properties of Coating Material | | | Ex.1B | Comp.Ex.1B | Ex.2B | Comp.Ex.2B |
|---|---|---|---|---|---|---|
| | | Volume of Nonvolatile Components ($cm^3$) | 9.3 | 9.3 | 10.0 | 10.0 |
| | | Volume of Pigment Component ($cm^3$) | 2.8 | 2.8 | 3.5 | 3.5 |
| | | Volume of Solid Particles of Additive ($cm^3$) | 0.7 | 0.7 | 0.7 | 0.7 |
| | | Pigment Volume Concentration (PVC) (%) | 38 | 38 | 43 | 43 |
| | | Amount of Zinc Powder (B) in Nonvolatile Components in Coating Composition (% by mass) | 59 | 59 | 53 | 53 |
| | | (B)/(A) <$Zn/SiO_2$> (mass ratio) | 1.6 | 1.6 | 1.6 | 1.6 |
| | | (b-1)/(A)<Flaky Zinc-based Powder/$SiO_2$> (mass ratio) | 1.6 | 0.0 | 1.6 | 0.0 |
| | | (b-2)/(A) <Spherical Zinc-based Powder/$SiO_2$> (mass ratio) | 0.0 | 1.6 | 0.0 | 1.6 |
| | | Amount of Flakey Zinc-based Powder (b-1) in Zinc Powder (B) (% by mass) | 100.0 | 0.0 | 100.0 | 0.0 |
| | | Amount of Spherical Zinc-based Powder (b-2) in Zinc Powder (B) (% by mass) | 0.0 | 100.0 | 0.0 | 100.0 |
| | | Amount of Zinc Powder (B) per Coated Area ($g/m^2$) | 17.2 | 17.2 | 18.0 | 18.0 |
| | | Amount of Conductive Pigment (C) in Nonvolatile Components in Coating Composition (% by mass) | 0.0 | 0.0 | 10.6 | 10.6 |
| | | VOC amount per Coated Area ($g/m^2$) | 87.0 | 87.0 | 90.9 | 90.9 |
| Coating Film Properties | Primary Rust-Preventive Properties | Average Dry Film Thickness ($\mu$m) | 8 | 8 | 9 | 9 |
| | | Outdoor Exposure (3 months after) — Rusting | 9 | 3 | 10 | 3 |
| | | Outdoor Exposure (3 months after) — White Rust | 9 | 10 | 9 | 10 |
| | | Outdoor Exposure (3 months after) — Rusting (heating at 800°C for 3 min) | 8 | 9 | 8 | 10 |
| | | Outdoor Exposure (3 months after) — White Rust (heating at 800°C for 3 min) | 10 | 10 | 10 | 10 |
| Weldability | (Welding speed = 600 mm/min) | Blowhole Occurrence Percentage (%) | 2.6 | 2.3 | 2.7 | 2.8 |

[Evaluation of Examples and Comparative Examples]

From Table 1B, the following can be illustrated.

When the conductive pigment together with the spherical zinc powder were used, the rust-preventive properties were evaluated to be 3, which was not a particular improvement as compared with when no conductive pigment was used (evaluation: 3). On the other hand, when the flaky zinc powder was used together with the conductive pigment, the rust-preventive properties were evaluated to be 10, namely improvement as compared with when no conductive pigment was used (evaluation: 9).

[Table 1C]

Table 1C

| | | | | Comp.Ex.1C | Comp.Ex.2C | Comp.Ex.3C | Ex.1C | Ex.2C | Ex.3C |
|---|---|---|---|---|---|---|---|---|---|
| Composition of Coating material | Main Agent Component | Solution of Alkylsilicate Condensate 1 (Mw=1500) | | 100 | 100 | 100 | 100 | 100 | 100 |
| | Pigment Paste Component | Pigment Paste Component No. | | 10 | 10 | 10 | 10 | 10 | 10 |
| | | Flaky Zinc Powder | STANDART Zinc flake GTT | 0.8 | 1.6 | 2.4 | 4.8 | 5.6 | 6.4 |
| | | Spherical Zinc Powder | F-2000 | 3.2 | 6.4 | 9.6 | 19.2 | 22.4 | 25.6 |
| | | Conductive Pigment | zinc oxide of JIS 3 grade | 0.8 | 1.6 | 2.4 | 4.8 | 5.6 | 6.4 |
| | | Anti-Settling Agent | TIXOGEL MPZ | 0.3 | 0.5 | 0.8 | 1.5 | 1.8 | 2.0 |
| | | Organic Solvent | Xylene | 1.3 | 2.5 | 3.8 | 7.5 | 8.8 | 10.0 |
| | | | Butyl Acetate | 0.6 | 1.3 | 1.9 | 3.8 | 4.4 | 5.0 |
| | | | Isobutyl Alcohol | 0.8 | 1.7 | 2.5 | 5.0 | 5.8 | 6.6 |
| | Total (in terms of mass) | | | 107.8 | 115.5 | 123.3 | 146.5 | 154.3 | 162.0 |
| Properties of Coating Material | | Volume of Nonvolatile Components (cm$^3$) | | 6.6 | 7.4 | 8.3 | 10.8 | 11.7 | 12.6 |
| | | Volume of Pigment Component (cm$^3$) | | 0.7 | 1.4 | 2.1 | 4.2 | 4.9 | 5.6 |
| | | Volume of Solid Particles of Additive (cm$^3$) | | 0.1 | 0.3 | 0.4 | 0.9 | 1.0 | 1.2 |
| | | Pigment Volume Concentration (PVC) (%) | | 13 | 23 | 31 | 47 | 51 | 54 |
| | | Amount of Zinc Powder (B) in Nonvolatile Components in Coating Composition (% by mass) | | 23 | 35 | 43 | 56 | 58 | 60 |
| | | (B)/(A) <Zn/SiO$_2$> (mass ratio) | | 0.3 | 0.6 | 1.0 | 1.9 | 2.2 | 2.5 |
| | | (b-1)/(A) <Flaky Zinc-based Powder/SiO$_2$> (mass ratio) | | 0.1 | 0.1 | 0.2 | 0.4 | 0.4 | 0.5 |
| | | (b-2)/(A) <Spherical Zinc-based Powder/SiO$_2$> (mass ratio) | | 0.3 | 0.5 | 0.8 | 1.5 | 1.8 | 2.0 |
| | | Amount of Flakey Zinc-based Powder (b-1) in Zinc Powder (B) (% by mass) | | 20.0 | 20.0 | 20.0 | 20.0 | 20.0 | 20.0 |
| | | Amount of Spherical Zinc-based Powder (b-2) in Zinc Powder (B) (% by mass) | | 80.0 | 80.0 | 80.0 | 80.0 | 80.0 | 80.0 |
| | | Amount of Zinc Powder (B) per Coated Area (g/m$^2$) | | 4.3 | 7.5 | 11.6 | 19.9 | 23.9 | 25.5 |
| | | Amount of Conductive Pigment (C) in Nonvolatile Components in Coating Composition (% by mass) | | 4.5 | 7.0 | 8.6 | 11.2 | 11.7 | 12.1 |
| | | VOC amount per Coated Area (g/m$^2$) | | 95.8 | 87.4 | 92.2 | 86.0 | 90.9 | 86.8 |
| Coating Film Properties | Primary Rust-Preventive Properties | Average Dry Film Thickness (μm) | | 7 | 7 | 8 | 9 | 10 | 10 |
| | | Outdoor Exposure (3 months after) | Rusting | 1 | 1 | 3 | 9 | 10 | 10 |
| | | | White Rust | 10 | 10 | 10 | 10 | 10 | 9 |
| | | | Rusting (heating at 800°C for 3 min) | 4 | 7 | 9 | 10 | 10 | 10 |
| | | | White Rust (heating at 800°C for 3 min) | 10 | 10 | 10 | 10 | 9 | 8 |
| Weldability | (Welding speed = 600 mm/min) | Blowhole Occurrence Percentage (%) | | 1.0 | 1.3 | 1.9 | 4.2 | 5.2 | 8.1 |

EP 2 876 144 B1

31

Table 1C (continued)

| | | | Ex.4C | Ex.5C | Ex.6C | Comp. Ex.4C |
|---|---|---|---|---|---|---|
| Composition of Coating material | Main Agent Component | Solution of Alkylsilicate Condensate 1 (Mw=1500) | 100 | 100 | 100 | 100 |
| | Pigment Paste Component | Pigment Paste Component No. | 10 | 11 | 10 | 10 |
| | | Flaky Zinc Powder | STANDART Zinc flake GTT | 7.2 | 7.2 | 8.0 | 8.8 |
| | | Spherical Zinc Powder | F-2000 | 28.8 | 28.8 | 32.0 | 35.2 |
| | | Conductive Pigment | zinc oxide of JIS 3 grade | 7.2 | 12.0 | 8.0 | 8.8 |
| | | Anti-Settling Agent | TIXOGEL MPZ | 2.3 | 2.3 | 2.5 | 2.8 |
| | | Organic Solvent | Xylene | 11.3 | 11.3 | 12.5 | 13.8 |
| | | | Butyl Acetate | 5.6 | 5.6 | 6.3 | 6.9 |
| | | | Isobutyl Alcohol | 7.4 | 7.4 | 8.3 | 9.1 |
| | Total (in terms of mass) | | 169.8 | 174.6 | 177.5 | 185.3 |
| Properties of Coating Material | | Volume of Nonvolatile Components (cm$^3$) | 13.4 | 14.3 | 14.3 | 15.1 |
| | | Volume of Pigment Component (cm$^3$) | 6.4 | 7.2 | 7.1 | 7.8 |
| | | Volume of Solid Particles of Additive (cm$^3$) | 1.3 | 1.3 | 1.5 | 1.6 |
| | | Pigment Volume Concentration (PVC) (%) | 57 | 60 | 60 | 62 |
| | | Amount of Zinc Powder (B) in Nonvolatile Components in Coating Composition (% by mass) | 62 | 57 | 63 | 65 |
| | | (B)/(A) <Zn/SiO$_2$> (mass ratio) | 2.9 | 2.9 | 3.2 | 3.5 |
| | | (b-1)/(A) <Flaky Zinc-based Powder/SiO$_2$> (mass ratio) | 0.6 | 0.6 | 0.6 | 0.7 |
| | | (b-2)/(A) <Spherical Zinc-based Powder/SiO$_2$> (mass ratio) | 2.3 | 2.3 | 2.5 | 2.8 |
| | | Amount of Flakey Zinc-based Powder (b-1) in Zinc Powder (B) (% by mass) | 20.0 | 20.0 | 20.0 | 20.0 |
| | | Amount of Spherical Zinc-based Powder (b-2) in Zinc Powder (B) (% by mass) | 80.0 | 80.0 | 80.0 | 80.0 |
| | | Amount of Zinc Powder (B) per Coated Area (g/m$^2$) | 26.9 | 25.2 | 28.1 | 34.9 |
| | | Amount of Conductive Pigment (C) in Nonvolatile Components in Coating Composition (% by mass) | 12.4 | 19.1 | 12.7 | 12.9 |
| | | VOC amount per Coated Area (g/m$^2$) | 83.3 | 78.3 | 80.2 | 93.0 |
| Coating Film Properties | Primary Rust-Preventive Properties | Average Dry Film Thickness (μm) | 10 | 10 | 10 | 12 |
| | | Outdoor Exposure (3 months after) | Rusting | 10 | 10 | 10 | 10 |
| | | | White Rust | 9 | 9 | 9 | 9 |
| | | | Rusting (heating at 800°C for 3 min) | 10 | 10 | 10 | 10 |
| | | | White Rust (heating at 800°C for 3 min) | 8 | 9 | 8 | 7 |
| Weldability | (Welding speed = 600 mm/min) | Blowhole Occurrence Percentage (%) | 9.5 | 9.9 | 9.9 | 16.0 |

EP 2 876 144 B1

[Table 2C]

Table 2C

| | | | | Ex.7C | Ex.8C | Ex.9C | Ex.10C |
|---|---|---|---|---|---|---|---|
| Composition of Coating material | Main Agent Component | Solution of Alkylsilicate Condensate 1 (Mw=1500) | | 100 | 100 | 100 | 100 |
| | Pigment Paste Component | Flaky Zinc Powder | STANDART Zinc flake GTT | 18.0 | 16.0 | 14.0 | 12.0 |
| | | Spherical Zinc Powder | F-2000 | 2.0 | 4.0 | 6.0 | 8.0 |
| | | Conductive Pigment | zinc oxide of JIS 3 grade | 4.0 | 4.0 | 4.0 | 4.0 |
| | | Anti-Settling Agent | TIXOGEL MPZ | 1.3 | 1.3 | 1.3 | 1.3 |
| | | Organic Solvent | Xylene | 6.3 | 6.3 | 6.3 | 6.3 |
| | | | Butyl Acetate | 3.1 | 3.1 | 3.1 | 3.1 |
| | | | Isobutyl Alcohol | 4.1 | 4.1 | 4.1 | 4.1 |
| | Total (in terms of mass) | | | 138.8 | 138.8 | 138.8 | 138.8 |
| Properties of Coating Material | | Volume of Nonvolatile Components (cm$^3$) | | 10.0 | 10.0 | 10.0 | 10.0 |
| | | Volume of Pigment Component (cm$^3$) | | 3.5 | 3.5 | 3.5 | 3.5 |
| | | Volume of Solid Particles of Additive (cm$^3$) | | 0.7 | 0.7 | 0.7 | 0.7 |
| | | Pigment Volume Concentration (PVC) (%) | | 43 | 43 | 43 | 43 |
| | | Amount of Zinc Powder (B) in Nonvolatile Components in Coating Composition (% by mass) | | 53 | 53 | 53 | 53 |
| | | (B)/(A) <Zn/SiO$_2$> (mass ratio) | | 1.6 | 1.6 | 1.6 | 1.6 |
| | | (b-1)/(A) <Flaky Zinc-based Powder/SiO$_2$> (mass ratio) | | 1.4 | 1.3 | 1.1 | 1.0 |
| | | (b-2)/(A) <Spherical Zinc-based Powder/SiO$_2$> (mass ratio) | | 0.2 | 0.3 | 0.5 | 0.6 |
| | | Amount of Flakey Zinc-based Powder (b-1) in Zinc Powder (B) (% by mass) | | 90.0 | 80.0 | 70.0 | 60.0 |
| | | Amount of Spherical Zinc-based Powder (b-2) in Zinc Powder (B) (% by mass) | | 10.0 | 20.0 | 30.0 | 40.0 |
| | | Amount of Zinc Powder (B) per Coated Area (g/m$^2$) | | 18.0 | 18.0 | 16.0 | 16.0 |
| | | Amount of Conductive Pigment (C) in Nonvolatile Components in Coating Composition (% by mass) | | 10.6 | 10.6 | 10.6 | 10.6 |
| | | VOC amount per Coated Area (g/m$^2$) | | 90.9 | 90.9 | 80.8 | 80.8 |
| Coating Film Properties | Primary Rust-Preventive Properties | Average Dry Film Thickness (μm) | | 9 | 9 | 8 | 8 |
| | | Outdoor Exposure (3 months after) | Rusting | 10 | 10 | 10 | 9 |
| | | | White Rust | 9 | 9 | 9 | 10 |
| | | | Rusting (heating at 800°C for 3 min) | 10 | 10 | 10 | 10 |
| | | | White Rust (heating at 800°C for 3 min) | 10 | 10 | 10 | 10 |
| Weldability | (Welding speed = 600 mm/min) | | Blowhole Occurrence Percentage (%) | 2.6 | 2.6 | 2.7 | 2.8 |

Table 2C (continued)

| Composition of Coating material | | | | Ex.11C | Ex.12C | Ex.13C | Ex.14C |
|---|---|---|---|---|---|---|---|
| | Main Agent Component | Solution of Alkylsilicate Condensate 1 (Mw=1500) | | 100 | 100 | 100 | 100 |
| | Pigment Paste Component | Flaky Zinc Powder | STANDART Zinc flake GTT | 10.0 | 8.0 | 6.0 | 4.0 |
| | | Spherical Zinc Powder | F-2000 | 10.0 | 12.0 | 14.0 | 16.0 |
| | | Conductive Pigment | zinc oxide of JIS 3 grade | 4.0 | 4.0 | 4.0 | 4.0 |
| | | Anti-Settling Agent | TIXOGEL MPZ | 1.3 | 1.3 | 1.3 | 1.3 |
| | | Organic Solvent | Xylene | 6.3 | 6.3 | 6.3 | 6.3 |
| | | | Butyl Acetate | 3.1 | 3.1 | 3.1 | 3.1 |
| | | | Isobutyl Alcohol | 4.1 | 4.1 | 4.1 | 4.1 |
| | Total (in terms of mass) | | | 138.8 | 138.8 | 138.8 | 138.8 |
| Properties of Coating Material | | Volume of Nonvolatile Components ($cm^3$) | | 10.0 | 10.0 | 10.0 | 10.0 |
| | | Volume of Pigment Component ($cm^3$) | | 3.5 | 3.5 | 3.5 | 3.5 |
| | | Volume of Solid Particles of Additive ($cm^3$) | | 0.7 | 0.7 | 0.7 | 0.7 |
| | | Pigment Volume Concentration (PVC) (%) | | 43 | 43 | 43 | 43 |
| | | Amount of Zinc Powder (B) in Nonvolatile Components in Coating Composition (% by mass) | | 53 | 53 | 53 | 53 |
| | | (B)/(A) <$Zn/SiO_2$> (mass ratio) | | 1.6 | 1.6 | 1.6 | 1.6 |
| | | (b-1)/(A) <Flaky Zinc-based Powder/$SiO_2$> (mass ratio) | | 0.8 | 0.6 | 0.5 | 0.3 |
| | | (b-2)/(A) <Spherical Zinc-based Powder/$SiO_2$> (mass ratio) | | 0.8 | 1.0 | 1.1 | 1.3 |
| | | Amount of Flakey Zinc-based Powder (b-1) in Zinc Powder (B) (% by mass) | | 50.0 | 40.0 | 30.0 | 20.0 |
| | | Amount of Spherical Zinc-based Powder (b-2) in Zinc Powder (B) (% by mass) | | 50.0 | 60.0 | 70.0 | 80.0 |
| | | Amount of Zinc Powder (B) per Coated Area ($g/m^2$) | | 16.0 | 18.0 | 16.0 | 18.0 |
| | | Amount of Conductive Pigment (C) in Nonvolatile Components in Coating Composition (% by mass) | | 10.6 | 10.6 | 10.6 | 10.6 |
| | | VOC amount per Coated Area ($g/m^2$) | | 80.8 | 90.9 | 80.8 | 90.9 |
| Coating Film Properties | Primary Rust-Preventive Properties | Average Dry Film Thickness (μm) | | 8 | 9 | 8 | 9 |
| | | Outdoor Exposure (3 months after) | Rusting | 9 | 8 | 8 | 8 |
| | | | White Rust | 10 | 10 | 10 | 10 |
| | | | Rusting (heating at 800°C for 3 min) | 10 | 10 | 10 | 10 |
| | | | White Rust (heating at 800°C for 3 min) | 10 | 10 | 10 | 10 |
| Weldability | (Welding speed = 600 mm/min) | Blowhole Occurrence Percentage (%) | | 2.5 | 2.6 | 2.7 | 2.6 |

34

[Table 3C]

Table 3C

| | | | | Comp.Ex.5C | Comp.Ex.6C | Ex.15C | Ex.16C | Ex.17C | Comp.Ex.7C |
|---|---|---|---|---|---|---|---|---|---|
| Composition of Coating material | | Main Agent Component | Solution of Alkylsilicate Condensate 1 (Mw=1500) | 100 | 100 | 100 | 100 | 100 | 100 |
| | Pigment Paste Component | Flaky Zinc Powder | STANDART Zinc flake GTT | 9.6 | 12.8 | 16.0 | 27.2 | 38.4 | 41.6 |
| | | Spherical Zinc Powder | F-2000 | 2.4 | 3.2 | 4.0 | 6.8 | 9.6 | 10.4 |
| | | Conductive Pigment | zinc oxide of JIS 3 grade | | | | | | |
| | | Anti-Settling Agent | TIXOGEL MPZ | 0.8 | 1.0 | 1.3 | 2.1 | 3.0 | 3.3 |
| | | Organic Solvent | Xylene | 3.8 | 5.0 | 6.3 | 10.6 | 15.0 | 16.3 |
| | | | Butyl Acetate | 1.9 | 2.5 | 3.1 | 5.3 | 7.5 | 8.1 |
| | | | Isobutyl Alcohol | 2.5 | 3.3 | 4.1 | 7.0 | 9.9 | 10.7 |
| | Total (in terms of mass) | | | 120.9 | 127.8 | 134.8 | 159.1 | 183.4 | 190.4 |
| Properties of Coating Material | | | Volume of Nonvolatile Components (cm³) | 7.9 | 8.6 | 9.3 | 11.8 | 14.3 | 15.0 |
| | | | Volume of Pigment Component (cm³) | 1.7 | 2.3 | 2.8 | 4.8 | 6.8 | 7.3 |
| | | | Volume of Solid Particles of Additive (cm³) | 0.4 | 0.6 | 0.7 | 1.3 | 1.8 | 1.9 |
| | | | Pigment Volume Concentration (PVC) (%) | 27 | 33 | 38 | 51 | 60 | 62 |
| | | | Amount of Zinc Powder (B) in Nonvolatile Components in Coating Composition (% by mass) | 47 | 54 | 59 | 70 | 75 | 77 |
| | | | (B)/(A) <Zn/SiO₂> (mass ratio) | 1.0 | 1.3 | 1.6 | 2.7 | 3.8 | 4.1 |
| | | | (b-1)/(A) <Flaky Zinc-based Powder/SiO₂> (mass ratio) | 0.8 | 1.0 | 1.3 | 2.2 | 3.0 | 3.3 |
| | | | (b-2)/(A) <Spherical Zinc-based Powder/SiO₂> (mass ratio) | 0.2 | 0.3 | 0.3 | 0.5 | 0.8 | 0.8 |
| | | | Amount of Flakey Zinc-based Powder (b-1) in Zinc Powder (B) (% by mass) | 80.0 | 80.0 | 80.0 | 80.0 | 80.0 | 80.0 |
| | | | Amount of Spherical Zinc-based Powder (b-2) in Zinc Powder (B) (% by mass) | 20.0 | 20.0 | 20.0 | 20.0 | 20.0 | 20.0 |
| | | | Amount of Zinc Powder (B) per Coated Area (g/m²) | 10.7 | 14.9 | 17.2 | 28.9 | 33.7 | 41.7 |
| | | | Amount of Conductive Pigment (C) in Nonvolatile Components in Coating Composition (% by mass) | 0.0 | 0.0 | 0.0 | 0.0 | 0.0 | 0.0 |
| | | | VOC amount per Coated Area (g/m²) | 85.1 | 91.7 | 87.0 | 93.8 | 84.1 | 98.3 |
| Coating Film Properties | Primary Rust-Preventive Properties | | Average Dry Film Thickness (μm) | 7 | 8 | 8 | 10 | 10 | 12 |
| | | Outdoor Exposure (3 months after) | Rusting | 2 | 6 | 8 | 10 | 10 | 10 |
| | | | White Rust | 10 | 10 | 9 | 10 | 10 | 10 |
| | | | Rusting (heating at 800°C for 3 min) | 7 | 8 | 8 | 10 | 10 | 10 |
| | | | White Rust (heating at 800°C for 3 min) | 10 | 10 | 10 | 9 | 7 | 5 |
| Weldability | (Welding speed = 600 mm/min) | | Blowhole Occurrence Percentage (%) | 0.3 | 1.1 | 2.4 | 7.0 | 9.5 | 10.5 |

Table 3C (continued)

| | | | | Comp.Ex.8C | Comp.Ex.9C | Comp.Ex.10C | Comp.Ex.11C | Ex.18C | Ex.19C |
|---|---|---|---|---|---|---|---|---|---|
| Composition of Coating material | | Main Agent Component | Solution of Alkylsilicate Condensate 1 (Mw=1500) | 100 | 100 | 100 | 100 | 100 | 100 |
| | Pigment Paste Component | Flaky Zinc Powder | STANDART Zinc flake GTT | 0.8 | 1.6 | 2.4 | 3.2 | 7.2 | 8.0 |
| | | Spherical Zinc Powder | F-2000 | 3.2 | 6.4 | 9.6 | 12.8 | 28.8 | 32.0 |
| | | Conductive Pigment | zinc oxide of JIS 3 grade | | | | | | |
| | | Anti-Settling Agent | TIXOGEL MPZ | 0.3 | 0.5 | 0.8 | 1.0 | 2.3 | 2.5 |
| | | Organic Solvent | Xylene | 1.3 | 2.5 | 3.8 | 5.0 | 11.3 | 12.5 |
| | | | Butyl Acetate | 0.6 | 1.3 | 1.9 | 2.5 | 5.6 | 6.3 |
| | | | Isobutyl Alcohol | 0.8 | 1.7 | 2.5 | 3.3 | 7.4 | 8.3 |
| | Total (in terms of mass) | | | 107.0 | 113.9 | 120.9 | 127.8 | 162.6 | 169.5 |
| Properties of Coating Material | | | Volume of Nonvolatile Components (cm$^3$) | 6.4 | 7.1 | 7.9 | 8.6 | 12.1 | 12.8 |
| | | | Volume of Pigment Component (cm$^3$) | 0.6 | 1.1 | 1.7 | 2.3 | 5.1 | 5.6 |
| | | | Volume of Solid Particles of Additive (cm$^3$) | 0.1 | 0.3 | 0.4 | 0.6 | 1.3 | 1.5 |
| | | | Pigment Volume Concentration (PVC) (%) | 11 | 20 | 27 | 33 | 53 | 55 |
| | | | Amount of Zinc Powder (B) in Nonvolatile Components in Coating Composition (% by mass) | 24 | 38 | 47 | 54 | 71 | 73 |
| | | | (B)/(A) <Zn/SiO$_2$> (mass ratio) | 0.3 | 0.6 | 1.0 | 1.3 | 2.9 | 3.2 |
| | | | (b-1)/(A) <Flaky Zinc-based Powder/SiO$_2$> (mass ratio) | 0.1 | 0.1 | 0.2 | 0.3 | 0.6 | 0.6 |
| | | | (b-2)/(A) <Spherical Zinc-based Powder/SiO$_2$> (mass ratio) | 0.3 | 0.5 | 0.8 | 1.0 | 2.3 | 2.5 |
| | | | Amount of Flakey Zinc-based Powder (b-1) in Zinc Powder (B) (% by mass) | 20.0 | 20.0 | 20.0 | 20.0 | 20.0 | 20.0 |
| | | | Amount of Spherical Zinc-based Powder (b-2) in Zinc Powder (B) (% by mass) | 80.0 | 80.0 | 80.0 | 80.0 | 80.0 | 80.0 |
| | | | Amount of Zinc Powder (B) per Coated Area (g/m$^2$) | 4.3 | 7.8 | 10.7 | 14.9 | 29.7 | 31.2 |
| | | | Amount of Conductive Pigment (C) in Nonvolatile Components in Coating Composition (% by mass) | 0.0 | 0.0 | 0.0 | 0.0 | 0.0 | 0.0 |
| | | | VOC amount per Coated Area (g/m$^2$) | 98.0 | 90.9 | 85.1 | 91.7 | 92.2 | 89.2 |
| Coating Film Properties | Primary Rust-Preventive Properties | | Average Dry Film Thickness (μm) | 7 | 7 | 7 | 8 | 10 | 10 |
| | | Outdoor Exposure (3 months after) | Rusting | 1 | 1 | 1 | 3 | 7 | 7 |
| | | | White Rust | 10 | 10 | 10 | 10 | 9 | 9 |
| | | | Rusting (heating at 800°C for 3 min) | 3 | 6 | 8 | 9 | 10 | 10 |
| | | | White Rust (heating at 800°C for 3 min) | 10 | 10 | 10 | 10 | 8 | 8 |
| Weldability | (Welding speed = 600 mm/min) | | Blowhole Occurrence Percentage (%) | 0.6 | 1.2 | 1.6 | 2.0 | 8.8 | 9.9 |

EP 2 876 144 B1

36

[Table 4C]

Table 4C

| | | | | Ex.2C | Ex.18C | Ex.3C | Ex.19C |
|---|---|---|---|---|---|---|---|
| | Main Agent Component | Solution of Alkylsilicate Condensate 1 (Mw=1500) | | 100 | 100 | 100 | 100 |
| Composition of Coating material | Pigment Paste Component | Flaky Zinc Powder | STANDART Zinc flake GTT | 5.6 | 7.2 | 6.4 | 8.0 |
| | | Spherical Zinc Powder | F-2000 | 22.4 | 28.8 | 25.6 | 32.0 |
| | | Conductive Pigment | zinc oxide of JIS 3 grade | 5.6 | | 6.4 | |
| | | Anti-Settling Agent | TIXOGEL MPZ | 1.8 | 2.3 | 2.0 | 2.5 |
| | | | Xylene | 8.8 | 11.3 | 10.0 | 12.5 |
| | | Organic Solvent | Butyl Acetate | 4.4 | 5.6 | 5.0 | 6.3 |
| | | | Isobutyl Alcohol | 5.8 | 7.4 | 6.6 | 8.3 |
| | Total (in terms of mass) | | | 154.3 | 162.6 | 162.0 | 169.5 |

(continued)

|  |  |  |  | Ex.2C | Ex.18C | Ex.3C | Ex.19C |
|---|---|---|---|---|---|---|---|
| Properties of Coating Material | | | Volume of Nonvolatile Components ($cm^3$) | 11.7 | 12.1 | 12.6 | 12.8 |
| | | | Volume of Pigment Component ($cm^3$) | 4.9 | 5.1 | 5.6 | 5.6 |
| | | | Volume of Solid Particles of Additive ($cm^3$) | 1.0 | 1.3 | 1.2 | 1.5 |
| | | | Pigment Volume Concentration (PVC) (%) | 51 | 53 | 54 | 55 |
| | | | Amount of Zinc Powder (B) in Nonvolatile Components in Coating Composition (% by mass) | 58 | 71 | 60 | 73 |
| | | | (B)/(A) <$Zn/SiO_2$> (mass ratio) | 2.2 | 2.9 | 2.5 | 3.2 |
| | | | (b-1)/(A) <Flaky Zinc-based Powder/$SiO_2$> (mass ratio) | 0.4 | 0.6 | 0.5 | 0.6 |
| | | | (b-2)/(A) <Spherical Zinc-based Powder/$SiO_2$> (mass ratio) | 1.8 | 2.3 | 2.0 | 2.5 |
| | | | Amount of Flakey Zinc-based Powder (b-1) in Zinc Powder (B) (% by mass) | 20.0 | 20.0 | 20.0 | 20.0 |
| | | | Amount of Spherical Zinc-based Powder (b-2) in Zinc Powder (B) (% by mass) | 80.0 | 80.0 | 80.0 | 80.0 |
| | | | Amount of Zinc Powder (B) per Coated Area ($g/m^2$) | 23.9 | 29.7 | 25.5 | 31.2 |
| | | | Amount of Conductive Pigment (C) in Nonvolatile Components in Coating Composition (% by mass) | 11.7 | 0.0 | 12.1 | 0.0 |
| | | | VOC amount per Coated Area ($g/m^2$) | 90.9 | 92.2 | 86.8 | 89.2 |
| Coating Film Properties | Primary Rust-Preventive Properties | | Average Dry Film Thickness ($\mu$m) | 10 | 10 | 10 | 10 |
| | | Outdoor Exposure (3 months after) | Rusting | 10 | 7 | 10 | 7 |
| | | | White Rust | 10 | 9 | 9 | 9 |
| | | | Rusting (heating at 800°C for 3 min) | 10 | 10 | 10 | 10 |
| | | | White Rust (heating at 800°C for 3 min) | 9 | 8 | 8 | 8 |
| Weldability | (Welding speed = 600 mm/min) | | Blowhole Occurrence Percentage (%) | 5.2 | 8.8 | 8.1 | 9.9 |

[Evaluation of Examples and Comparative Examples]

It has been found from Table 1C that in the combined use of the flaky zinc powder and the spherical zinc powder, the rust-preventive properties were superior when PVC was not less than 35%, but were poor when PVC was less than 35%; regarding weldability, the blowhole occurrence percentage was superior, being not more than 10% when PVC was not more than 60%, but the blowhole occurrence percentage was poor, being more than 10% when PVC was more than 60%.

It has been found from Table 2C and Table 3C that even where the ratio of the flaky zinc powder to the spherical zinc powder was varied, as long as PVC was 35 to 60%, evaluation results of coating film properties and weldability were superior.

From the comparison between Example 18C and Example 2C in Table 4C and the comparison between Example 19C and Example 3C in Table 4C, it has been found that in the combined use of the flaky zinc powder and the spherical zinc powder, further using the conductive pigment resulted in further improvement of rust-preventive properties and weldability.

[Table 1D]

Table 1D

| | | | Comp.Ex.1D | Ex.1D | Ex.2D | Ex.3D | Ex.4D | Comp.Ex.2D |
|---|---|---|---|---|---|---|---|---|
| Composition of Coating material | Main Agent Component | Solution of Alkylsilicate Condensate 1 (Mw=1500) | 100.0 | 100.0 | 100.0 | 50.0 | 41.0 | 38.0 |
| | | S-LEC B BM-2 (polyvinylbutyral resin) | | | | 3.1 | 3.8 | 4.0 |
| | Pigment Paste Component | Flaky Zinc Powder — STANDART Zinc flake GTT | 10.0 | 15.0 | 25.0 | 25.0 | 25.0 | 25.0 |
| | | Spherical Zinc Powder — F-2000 | | | | | | |
| | | Anti-Settling Agent — TIXOGEL MPZ | 1.7 | 1.7 | 1.7 | 1.7 | 1.7 | 1.7 |
| | | Conductive Pigment — Zinc Oxide of JIS 3 grade | 19.0 | 15.0 | 7.0 | 7.0 | 7.0 | 7.0 |
| | | Organic Solvent — Xylene | 8.5 | 8.5 | 8.5 | 40.0 | 50.0 | 52.0 |
| | | Organic Solvent — Butyl Acetate | 4.2 | 4.2 | 4.2 | 4.2 | 4.2 | 4.2 |
| | | Organic Solvent — Isobutyl Alcohol | 4.2 | 4.2 | 4.2 | 4.2 | 4.2 | 4.2 |
| Total (in terms of mass) | | | 148 | 149 | 151 | 135 | 137 | 136 |

(continued)

| | | | Comp.Ex.1D | Ex.1D | Ex.2D | Ex.3D | Ex.4D | Comp.Ex.2D |
|---|---|---|---|---|---|---|---|---|
| Properties of Coating Material | | Volume of Nonvolatile Components (cm³) | 11.5 | 11.5 | 11.5 | 11.5 | 11.6 | 11.6 |
| | | Volume of Pigment Component (cm³) | 4.8 | 4.8 | 4.8 | 4.8 | 4.8 | 4.8 |
| | | Volume of Solid Particles of Additive (cm³) | 1.0 | 1.0 | 1.0 | 1.0 | 1.0 | 1.0 |
| | | Pigment Volume Concentration (PVC) (%) | 50 | 50 | 50 | 50 | 50 | 50 |
| | | Amount of Zinc Powder (B) in Nonvolatile Components in Coating Composition (% by mass) | 23 | 34 | 54 | 58 | 59 | 59 |
| | | (B)/(A) <Zn/SiO₂> (mass ratio) | 0.8 | 1.2 | 2.0 | 4.0 | 4.8 | 5.2 |
| | | (b-1)/(A) <Flaky Zinc-based Powder/SiO₂> (mass ratio) | 0.8 | 1.2 | 2.0 | 4.0 | 4.8 | 5.2 |
| | | (b-2)/(A) <Spherical Zinc-based Powder/SiO₂> (mass ratio) | 0.0 | 0.0 | 0.0 | 0.0 | 0.0 | 0.0 |
| | | Amount of Flakey Zinc-based Powder (b-1) in Zinc Powder (B) (% by mass) | 100.0 | 100.0 | 100.0 | 100.0 | 100.0 | 100.0 |
| | | Amount of Spherical Zinc-based Powder (b-2) in Zinc Powder (B) (% by mass) | 0.0 | 0.0 | 0.0 | 0.0 | 0.0 | 0.0 |
| | | Amount of Zinc Powder (B) per Coated Area (g/m²) | 6.9 | 11.7 | 19.6 | 17.5 | 19.4 | 19.4 |
| | | Amount of Conductive Pigment (C) in Nonvolatile Components in Coating Composition (% by mass) | 43.9 | 33.9 | 15.1 | 16.2 | 16.4 | 16.5 |
| | | VOC amount per Coated Area (g/m²) | 72.4 | 81.5 | 81.6 | 64.4 | 73.3 | 72.8 |
| Coating Film Properties | | Average Dry Film Thickness (μm) | 8 | 9 | 9 | 8 | 9 | 9 |
| | Primary Rust-Preventive Properties | Outdoor Exposure (2 months after) Rusting | 6 | 8 | 10 | 10 | 10 | 10 |
| | | Outdoor Exposure (2 months after) White Rust | 10 | 10 | 9 | 9 | 10 | 10 |
| | Overcoatability | Adhesion Strength (MPa) | 5.8 | 5.5 | 5.9 | 5.8 | 6.2 | 6.1 |

| | | | Comp.Ex.1D | Ex.1D | Ex.2D | Ex.3D | Ex.4D | Comp.Ex.2D |
|---|---|---|---|---|---|---|---|---|
| Weldability (welding speed = 600 mm/min) | First Layer Side Bead | Pits (Number of Pits) | 0 | 0 | 0 | 0 | 0 | 0 |
| | | Gas Groove (mm) | 0 | 0 | 0 | 0 | 0 | 0 |
| | Last Layer Side Bead | Pits (Number of Pits) | 0 | 0 | 0 | 0 | 0 | 0 |
| | | Gas Groove (mm) | 0 | 0 | 0 | 0 | 0 | 0 |
| | | Blowhole Occurrence Percentage (%) | 5.0 | 5.6 | 6.0 | 8.1 | 9.6 | 12.0 |

[Evaluation of Examples and Comparative Examples]

From Table 1D, the following points have been made clear.

When the mass ratio of the zinc dust (B) to the siloxane-based binder (A) in terms of $SiO_2$ ((B)/(A)) was in the range of 1.0 to 5.0, the evaluation results of coating film properties and weldability were superior. On the other hand, when the mass ratio was less than 1.0, the rust-preventive properties were poor. When the mass ratio was more than 5.0, the blowhole occurrence percentage was poor, being more than 10%.

Reference Signs List

10    sandblasted plate (lower plate)
20    sandblasted plate (upper plate)

**Claims**

1.  A primary rust-preventive coating composition comprising a siloxane-based binder (A) having a weight average molecular weight (Mw) as measured by gel permeation chromatography (GPC) in terms of standard polystyrene of 1000 to 6000 as described herein wherein the siloxane-based binder (A) is a condensate of an alkylsilicate, a zinc dust (B) comprising a flaky zinc-based powder (b-1), and a conductive pigment (C), the primary rust-preventive coating composition having a pigment volume concentration (PVC) as described herein of 35 to 60%, and having a mass ratio ((B)/(A)) of the zinc dust (B) to the siloxane-based binder (A) in terms of $SiO_2$ of 1.0 to 5.0.

2.  The primary rust-preventive coating composition according to claim 1, wherein based on 100% by mass of the total content of the zinc dust (B), the content of the flaky zinc-based powder (b-1) is not less than 15% by mass.

3.  The primary rust-preventive coating composition according to claim 1 or 2, wherein the mass ratio ((b-1)/(A)) of the flaky zinc-based powder (b-1) to the siloxane-based binder (A) in terms of $SiO_2$ is 1.0 to 5.0.

4.  The primary rust-preventive coating composition according to claim 1 or 2, which further contains, as the zinc dust (B), a spherical zinc-based powder (b-2) together with the flaky zinc-based powder (b-1).

5.  The primary rust-preventive coating composition according to claim 4, wherein based on 100% by mass of the total content of the zinc dust (B), the content of the flaky zinc-based powder (b-1) is 15 to 90% by mass and the content of the spherical zinc-based powder (b-2) is 10 to 85% by mass.

6.  The primary rust-preventive coating composition according to any one of claims 1 to 5, wherein the conductive pigment (C) is zinc oxide.

7.  The primary rust-preventive coating composition according to any one of claims 1 to 6, wherein the flaky zinc-based powder (b-1) comprises at least one selected from a flaky zinc powder and a flaky zinc alloy powder.

8.  The primary rust-preventive coating composition according to any one of claims 1 to 7, wherein the flaky zinc-based powder (b-1) has a median diameter (D50) of not more than 30 $\mu$m and an average thickness of not more than 1 $\mu$m.

9.  A primary rust-preventive coating film which is formed from the primary rust-preventive coating composition according to any one of claims 1 to 8 and has an average dry film thickness of not more than 10 $\mu$m.

10. A substrate with a primary rust-preventive coating film which comprises a substrate and a coating film, the coating film being provided on a surface of the substrate and formed from the primary rust-preventive coating composition according to any one of claims 1 to 8.

11. A substrate rust prevention method comprising a step of applying the primary rust-preventive coating composition according to any one of claims 1 to 8 on a substrate surface and a step of curing the coating composition applied to form a primary rust-preventive coating film.

**12.** A process for producing a substrate with a primary rust-preventive coating film comprising a step of applying the primary rust-preventive coating composition according to any one of claims 1 to 8 on a substrate surface and a step of curing the coating composition applied to form a primary rust-preventive coating film.

**Patentansprüche**

**1.** Rostverhindernde Primärbeschichtungszusammensetzung, umfassend ein Bindemittel auf Siloxanbasis (A), dessen gewichtsgemitteltes Molekulargewicht (Mw), bezogen auf einen Polystyrolstandard, 1.000 bis 6.000 beträgt, gemessen durch Gelpermeationschromatographie (GPC) wie hierin beschrieben,
wobei das Bindemittel auf Siloxanbasis (A) ein Kondensat eines Alkylsilikats, eines Zinkstaubs (B), der ein plättchenförmiges Pulver auf Zinkbasis (b-1) umfasst, und eines leitfähigen Pigments (C) ist,
wobei die rostverhindernde Primärbeschichtungszusammensetzung eine wie hierin beschriebene Pigmentvolumenkonzentration (PVC) von 35 bis 60% und ein Massenverhältnis ((B)/(A)) von Zinkstaub (B) zum Bindemittel auf Siloxanbasis (A), bezogen auf $SiO_2$, von 1,0 bis 5,0 aufweist.

**2.** Rostverhindernde Primärbeschichtungszusammensetzung gemäß Anspruch 1, wobei die Menge an plättchenförmigem Pulver auf Zinkbasis (b-1) nicht weniger als 15 Massenprozent, bezogen auf 100 Massenprozent der Gesamtmenge an Zinkstaub (B), beträgt.

**3.** Rostverhindernde Primärbeschichtungszusammensetzung gemäß Anspruch 1 oder 2, wobei das Massenverhältnis ((b-1)/(A)) von plättchenförmigem Pulver auf Zinkbasis (b-1) zum Bindemittel auf Siloxanbasis (A), bezogen auf $SiO_2$, 1,0 bis 5,0 beträgt.

**4.** Rostverhindernde Primärbeschichtungszusammensetzung gemäß Anspruch 1 oder 2, die als Zinkstaub (B) ferner ein kugelförmiges Pulver auf Zinkbasis (b-2) zusammen mit dem plättchenförmigen Pulver auf Zinkbasis (b-1) enthält.

**5.** Rostverhindernde Primärbeschichtungszusammensetzung gemäß Anspruch 4, wobei die Menge an plättchenförmigem Pulver auf Zinkbasis (b-1) 15 bis 90 Massenprozent und die Menge an kugelförmigem Pulver auf Zinkbasis (b-2) 10 bis 85 Massenprozent, bezogen auf 100 Massenprozent der Gesamtmenge an Zinkstaub (B), beträgt.

**6.** Rostverhindernde Primärbeschichtungszusammensetzung gemäß einem der Ansprüche 1 bis 5, wobei das leitfähige Pigment (C) Zinkoxid ist.

**7.** Rostverhindernde Primärbeschichtungszusammensetzung gemäß einem der Ansprüche 1 bis 6, wobei das plättchenförmige Pulver auf Zinkbasis (b-1) mindestens eines umfasst, das aus einem plättchenförmigen Zinkpulver und einem plättchenförmigen Pulver einer Zinklegierung ausgewählt ist.

**8.** Rostverhindernde Primärbeschichtungszusammensetzung gemäß einem der Ansprüche 1 bis 7, wobei das plättchenförmige Pulver auf Zinkbasis (b-1) einen Mediandurchmesser (D50) von nicht mehr als 30 $\mu$m und eine mittlere Dicke von nicht mehr als 1 $\mu$m aufweist.

**9.** Rostverhindernder Primärbeschichtungsfilm, der aus der rostverhindernden Primärbeschichtungszusammensetzung gemäß einem der Ansprüche 1 bis 8 gebildet ist und eine mittlere Trockenfilmdicke von nicht mehr als 10 $\mu$m aufweist.

**10.** Substrat mit einem rostverhindernden Primärbeschichtungsfilm, das ein Substrat und einen Beschichtungsfilm umfasst, wobei der Beschichtungsfilm auf einer Oberfläche des Substrats vorgesehen und aus der rostverhindernden Primärbeschichtungszusammensetzung gemäß einem der Ansprüche 1 bis 8 gebildet ist.

**11.** Verfahren zur Substrat-Rostverhinderung, das einen Schritt, bei dem die rostverhindernde Primärbeschichtungszusammensetzung gemäß einem der Ansprüche 1 bis 8 auf eine Substratoberfläche aufgebracht wird, und einen Schritt, bei dem die aufgebrachte Beschichtungszusammensetzung gehärtet wird, um einen rostverhindernden Primärbeschichtungsfilm zu bilden, umfasst.

**12.** Verfahren zur Herstellung eines Substrats mit einem rostverhindernden Primärbeschichtungsfilm, das einen Schritt, bei dem die rostverhindernde Primärbeschichtungszusammensetzung gemäß einem der Ansprüche 1 bis 8 auf eine Substratoberfläche aufgebracht wird, und einen Schritt, bei dem die aufgebrachte Beschichtungszusammensetzung gehärtet wird, um einen rostverhindernden Primärbeschichtungsfilm zu bilden, umfasst.

**Revendications**

1. Composition de revêtement primaire antirouille comprenant un liant à base de siloxane (A) ayant un poids moléculaire moyen pondéral (Mw) tel que mesuré par chromatographie par perméation de gel (CPG) en termes de polystyrène standard de 1000 à 6 000 tel que décrit ici dans laquelle le liant à base de siloxane (A) est un condensat d'un silicate d'alkyle, d'une poussière de zinc (B) comprenant une poudre floconneuse à base de zinc (b-1), et d'un pigment conducteur (C), la composition de revêtement primaire antirouille ayant une concentration en volume de pigment (PVC) telle que décrite ici de 35 à 60 %, et ayant un rapport de masse ((B)/(A)) de la poussière de zinc (B) sur le liant à base de siloxane (A) en termes de $SiO_2$ de 1,0 à 5,0.

2. Composition de revêtement primaire antirouille selon la revendication 1, dans laquelle sur la base de 100 % en masse de la teneur totale en poussière de zinc (B), la teneur en poudre floconneuse à base de zinc (b-1) n'est pas inférieure à 15 % en masse.

3. Composition de revêtement primaire antirouille selon la revendication 1 ou 2, dans laquelle le rapport de masse ((b-1)/(A)) de la poudre floconneuse à base de zinc (b-1) sur le liant à base de siloxane (A) en termes de $SiO_2$ est 1,0 à 5,0.

4. Composition de revêtement primaire antirouille selon la revendication 1 ou 2, qui contient en outre, en tant que poussière de zinc (B), une poudre sphérique à base de zinc (b-2) conjointement avec la poudre floconneuse à base de zinc (b-1).

5. Composition de revêtement primaire antirouille selon la revendication 4, dans laquelle sur la base de 100 % en masse de la teneur totale en poussière de zinc (B), la teneur en poudre floconneuse à base de zinc (b-1) est 15 à 90 % en masse et la teneur en poudre sphérique à base de zinc (b-2) est 10 à 85 % en masse.

6. Composition de revêtement primaire antirouille selon l'une quelconque des revendications 1 à 5, dans laquelle le pigment conducteur (C) est de l'oxyde de zinc.

7. Composition de revêtement primaire antirouille selon l'une quelconque des revendications 1 à 6, dans laquelle la poudre floconneuse à base de zinc (b-1) comprend l'une au moins sélectionnée parmi une poudre de zinc floconneuse et une poudre d'alliage de zinc floconneuse.

8. Composition de revêtement primaire antirouille selon l'une quelconque des revendications 1 à 7, dans laquelle la poudre floconneuse à base de zinc (b-1) a un diamètre médian (D50) de pas plus de 30 $\mu$m et une épaisseur moyenne de pas plus de 1 $\mu$m.

9. Film de revêtement primaire antirouille qui est formé à partir de la composition de revêtement primaire antirouille selon l'une quelconque des revendications 1 à 8 et a une épaisseur moyenne de film sec de pas plus de 10 $\mu$m.

10. Substrat avec un film de revêtement primaire antirouille qui comprend un substrat et un film de revêtement, le film de revêtement étant fourni sur une surface du substrat et formé à partir de la composition de revêtement primaire antirouille selon l'une quelconque des revendications 1 à 8.

11. Procédé de prévention de rouille d'un substrat comprenant une étape d'application de la composition de revêtement primaire antirouille selon l'une quelconque des revendications 1 à 8 sur une surface de substrat et une étape de cuisson de la composition de revêtement appliquée pour former un film de revêtement primaire antirouille.

12. Procédé de production d'un substrat avec un film de revêtement primaire antirouille comprenant une étape d'application de la composition de revêtement primaire antirouille selon l'une quelconque des revendications 1 à 8 sur une surface de substrat et une étape de cuisson de la composition de revêtement appliquée pour former un film de revêtement primaire antirouille.

[Fig. 1]

(a)

600mm
50mm
20

Welding after joining

12mm
10

(b)

100mm
20
12mm
10
600mm

(c)

12mm
50mm
20

Welding after joining

12mm
10
100mm

[Fig. 2]

(a)

600mm

50mm

12mm

20

10

(b)

Torch angle
forward tilt = 5°

Welding direction

Torch shift
= 100mm

Last layer (rear)

20

100mm

12mm

10

600mm

First layer (front)

Welding direction

Torch angle
forward tilt = 5°

(c)

Torch
angle
=45°

Torch
angle
=45°

20

10

**EP 2 876 144 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60133072 A
- WO 2009093319 A
- JP 2012036279 A
- WO 2009081452 A1
- JP 2005232537 A
- JP 2006213909 A
- CN 102002318 A
- EP 0246566 A2
- JP 2010269497 A